(19) Europäisches Patentamt
European Patent Office
Office européen des brevets

(11) **EP 2 619 479 B1**

(12) **EUROPÄISCHE PATENTSCHRIFT**

(45) Veröffentlichungstag und Bekanntmachung des Hinweises auf die Patenterteilung:
**04.03.2015  Patentblatt 2015/10**

(51) Int Cl.:
*F16H 59/66* (2006.01)          *F16H 61/02* (2006.01)
*B60W 40/076* (2012.01)         *B60W 40/072* (2012.01)

(21) Anmeldenummer: **11738738.1**

(22) Anmeldetag: **03.08.2011**

(86) Internationale Anmeldenummer:
**PCT/EP2011/063346**

(87) Internationale Veröffentlichungsnummer:
**WO 2012/038138 (29.03.2012 Gazette 2012/13)**

(54) **VERFAHREN ZUR SCHALTSTEUERUNG EINES AUTOMATISIERTEN STUFENSCHALTGETRIEBES**

METHOD FOR CONTROLLING THE SHIFTING OF AN AUTOMATIC GEARED TRANSMISSION

PROCÉDÉ DE COMMANDE DES PASSAGES DE RAPPORT D'UNE BOÎTE DE VITESSES AUTOMATISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2010   DE 102010041325**

(43) Veröffentlichungstag der Anmeldung:
**31.07.2013   Patentblatt 2013/31**

(73) Patentinhaber: **ZF Friedrichshafen AG**
**88038 Friedrichshafen (DE)**

(72) Erfinder:
• WÜRTHNER, Maik
  88677 Markdorf (DE)
• MAIER, Alexander
  88046 Friedrichshafen (DE)
• STAUDINGER, Joachim
  87700 Memmingen (DE)
• KEMLER, Johannes
  88212 Ravensburg (DE)

(56) Entgegenhaltungen:
DE-A1- 10 129 149          DE-A1-102004 030 149
DE-A1-102004 040 351       DE-A1-102005 050 753
DE-A1-102006 001 818       US-A- 5 832 400

**Beschreibung**

Die Erfindung betrifft ein Verfahren zur Schaltsteuerung eines automatisierten Stufenschaltgetriebes, das in einem Antriebsstrang eines Kraftfahrzeugs zwischen einem als Verbrennungsmotor ausgebildeten Antriebsmotor und einem Achsantrieb angeordnet ist, wobei während der Fahrt neben aktuellen fahrzeug-, fahrbahn-, und fahrerspezifischen Betriebsparametern auch auf einen dem Kraftfahrzeug vorausliegenden Streckenabschnitt bezogene topographische Daten, insbesondere das Höhenprofil, ermittelt wird, daraus das Fahrwiderstandsprofil des Kraftfahrzeugs für den vorausliegenden Streckenabschnitt bestimmt wird, und im Automatikmodus des Stufenschaltgetriebes während eines Zugbetriebs Steuerbefehle für Zug-Hochschaltungen und/oder Zug-Rückschaltungen in Abhängigkeit des Fahrwiderstandsprofils abgeleitet und umgesetzt werden.

Moderne Stufenschaltgetriebe, wie automatisierte Schaltgetriebe, Planeten-Automatgetriebe und Doppelkupplungsgetriebe, können sowohl in einem Manuellmodus als auch in einem Automatikmodus betrieben werden. Im Manuellmodus können Schaltungen unmittelbar durch den Fahrer ausgelöst werden, beispielsweise indem der Fahrer mit der Hand einen dafür vorgesehenen Schalthebel in eine Hochschaltrichtung oder in eine Rückschaltrichtung auslenkt. Im Automatikmodus werden Schaltungen dagegen automatisiert ausgelöst, indem aktuelle fahrzeug-, fahrbahn- und fahrerspezifische Betriebsparameter, wie die aktuelle Fahrgeschwindigkeit, die aktuelle Fahrbeschleunigung, die aktuelle Motordrehzahl, das aktuelle Motormoment, die aktuelle Fahrzeugmasse, die aktuelle Fahrbahnneigung (Steigung, Ebene, Gefälle), der aktuelle Fahrwiderstand und der aktuelle Fahrerwunsch (Leistungsanforderung des Fahrers oder eines Tempomaten), ermittelt und Schaltungen anhand von Schaltkennfeldern oder Schaltkennlinien ausgelöst werden. Die aktuellen Betriebsparameter können entweder unmittelbar gemessen oder aus gemessenen Werten berechnet werden. Beispielsweise kann der aktuelle Fahrerwunsch mittels einer zugeordneten Kennlinie aus der über ein Potentiometer messbaren Stellung des Fahrpedals abgeleitet werden. In verbesserten Verfahren wird hierzu noch zusätzlich die berechenbare Änderungsrate der Fahrpedalstellung herangezogen.

Die auf aktuellen Betriebsparametern basierende Schaltsteuerung automatisierter Stufenschaltgetriebe liefert zwar in den meisten Betriebssituationen gute Ergebnisse, was eine hohe Fahrdynamik, einen niedrigen Kraftstoffverbrauch und einen hohen Schalt- und Fahrkomfort betrifft. Besonders im Übergangsbereich zwischen unterschiedlichen Fahrbahnneigungen und Fahrwiderständen ergeben sich jedoch häufig ungünstige Schaltungen, da konventionelle Verfahren zur Schaltsteuerung die Topographie des dem Kraftfahrzeug vorausliegenden Streckenabschnitts nicht berücksichtigen. So kann beispielsweise vor dem Erreichen einer Bergkuppe eine Rückschaltung ausgelöst werden, obwohl die Bergkuppe mit geringem Geschwindigkeitsverlust noch in dem aktuell eingelegten Gang überwunden und somit die Rückschaltung sowie eine anschließende Hochschaltung vermieden werden könnte.

Ebenso ist es in Kenntnis einer bevorstehenden Steigung vorteilhaft, wenn schon vor der Einfahrt in die Steigung in einen niedrigeren Gang zurückgeschaltet wird, da die Steigung dann mit einer höheren Fahrgeschwindigkeit befahren und gegebenenfalls eine weitere Rückschaltung vermieden werden kann. Auch ist es bei einem Übergang von einem Gefälle in eine Ebene zweckmäßig, schon vor dem Erreichen der Ebene in einen höheren Gang hochzuschalten, da hierdurch unter Nutzung der kinetischen Energie des Kraftfahrzeugs mit höherer Fahrgeschwindigkeit in die Ebene eingefahren wird und somit der Übergang in den Zugbetrieb später erfolgt. ,

Zur Verbesserung des Schaltverhaltens automatisierter Stufenschaltgetriebe sind daher schon einige Verfahren und Vorrichtungen vorgeschlagen worden, welche die Erfassung von auf einen dem Kraftfahrzeug vorausliegenden Streckenabschnitt bezogenen topographischen Daten, insbesondere des Höhenprofils, und deren Berücksichtigung bei der Schaltsteuerung eines automatisierten Stufenschaltgetriebes vorsehen.

So wird in der DE 101 29 149 A1 ein Verfahren zur Optimierung der Kraftübertragung eines Motors auf die Antriebsräder eines Fahrzeugs vorgeschlagen, bei dem für die Vorgabe von Sollwerten für die Motor- und/oder Getriebesteuerung auch Straßen- und Kartendaten eines Navigationssystems verwendet werden. Das bekannte Verfahren sieht vor, dass aus den Straßen- und Kartendaten des Navigationssystems Informationen über die vorausliegende Fahrstrecke, wie die Fahrbahnsteigung, die Fahrbahnkrümmung (Kurvenradius) und weitere Attribute der Fahrbahn sowie ihrer Umgebung ermittelt und daraus Steuerbefehle für die Getriebe- und/oder Motorsteuerung abgeleitet werden.

In der DE 10 2006 001 818 A1 sind ein Verfahren und eine Vorrichtung zur Fahrerunterstützung beim Fahrbetrieb eines Nutzfahrzeugs beschrieben, bei welchen die auf einen dem Kraftfahrzeug vorausliegenden Streckenabschnitt der Fahrtroute bezogenen Topographiedaten aus einem Speicher abgerufen und bei der Einstellung von Fahrbetriebskomponenten, insbesondere bei der Einstellung eines Gangs des Schaltgetriebes durch die Getriebesteuerung, rechnergestützt ausgewertet werden. Die Topographiedaten können in Form eines Höhenprofils oder eines Steigungsprofils der jeweiligen Fahrtroute abgespeichert sein.

Schließlich ist aus der DE 10 2005 050 753 A1 ein Verfahren und eine Vorrichtung zur Steuerung und/oder Regelung eines automatischen Systems eins Kraftfahrzeugs bekannt, bei welchen zur Erfassung einer vor dem Kraftfahrzeug liegenden Fahrstrecke Daten erfasst und zu einem Fahrwiderstandsprofil des Kraftfahrzeugs zusammengefasst werden. Das ermittelte Fahrwiderstandsprofil soll unter anderem dazu genutzt werden, in einem Automatgetriebe eine zur Bewältigung der vor dem Kraftfahrzeug liegenden Fahrstrecke geeignete Getriebeübersetzung einzustellen.

Die bekannten Verfahren und Vorrichtungen offenbaren zwar brauchbare Ansätze zur Verbesserung des Schaltverhaltens automatisierter Stufenschaltgetriebe. Konkrete Angaben darüber, wie aus den auf den dem Kraftfahrzeug vorausliegenden Streckenabschnitt bezogenen topographischen Daten, wie dem Höhenprofil, dem Steigungsprofil, oder dem Fahrwiderstandsprofil, bestimmte Steuerbefehle abgeleitet und in der Getriebesteuerung umgesetzt werden sollen, sind den vorgenannten Druckschriften jedoch nicht zu entnehmen.

Vor diesem Hintergrund liegt der Erfindung die Aufgabe zugrunde, ein Verfahren zur Schaltsteuerung eines automatisierten Stufenschaltgetriebes der eingangs genannten Art anzugeben, mit dem im Automatikmodus während eines Zugbetriebs aus dem Fahrwiderstandsprofil des Kraftfahrzeugs für den vorausliegenden Streckenabschnitt konkrete Steuerbefehle für Zug-Hochschaltungen und/oder Zug-Rückschaltungen abgeleitet sowie mit möglichst geringem Steuerungsaufwand umgesetzt werden.

Diese Aufgabe ist in Verbindung mit den im Oberbegriff des Anspruchs 1 genannten Merkmalen dadurch gelöst, dass aus dem Fahrwiderstandsprofil für den vorausliegenden Streckenabschnitt und Betriebsparametern des Antriebsmotors sowie des Stufenschaltgetriebes, wie beispielsweise dem Drehmoment- und dem Verbrauchskennfeld des Antriebsmotors sowie den Gangübersetzungen des Stufenschaltgetriebes, ein Grenzgangverlauf bestimmt wird, der aus der Abfolge desjenigen jeweils höchsten Gangs gebildet ist, in dem die an den Antriebsrädern des Kraftfahrzeugs wirksame Zugkraft des Antriebsmotors jeweils größer als der Fahrwiderstand ist, und dass der Grenzgangverlauf zur Ableitung von Steuerbefehlen für eine Zug-Hochschaltung und/oder Zug-Rückschaltung bewertet wird.

Vorteilhafte Ausgestaltungen und Weiterbildungen des erfindungsgemäßen Verfahrens sind Gegenstand der Unteransprüche.

Die Erfindung geht demnach aus von einem an sich bekannten automatisierten Stufenschaltgetriebe, das in einem Antriebsstrang eines Kraftfahrzeugs zwischen einem als Verbrennungsmotor ausgebildeten Antriebsmotor und einem Achsantrieb angeordnet ist. Während der Fahrt werden fortlaufend, d.h. in einem bestimmten Zeittakt oder Fahrwegabstand, neben aktuellen fahrzeug-, fahrbahn- und fahrerspezifischen Betriebsparametern auch auf einen dem Kraftfahrzeug vorausliegenden Streckenabschnitt bezogene topographische Daten, vor allem das jeweilige Höhenprofil, ermittelt. Aus dem sich daraus ergebenden Steigungsprofil kann in Kenntnis der Fahrzeugmasse, des Luftwiderstandsbeiwertes und des Rollwiderstandsbeiwertes des Fahrzeug für jeden Wegpunkt der Fahrwiderstand nach der bekannten Fahrwiderstandsgleichung $F_{FW} = F_{Luft} + F_{Roll} + F_{Steig}$ als Summe aus dem Luftwiderstand $F_{Luft}$, dem Rollwiderstand $F_{Roll}$ sowie dem Steigungswiderstand $F_{Steig}$ und somit insgesamt das Fahrwiderstandsprofil $F_{FW}(x_F)$ des Kraftfahrzeugs für den vorausliegenden Streckenabschnitt bestimmt werden.

Wenn das Stufenschaltgetriebe im Automatikmodus betrieben wird und sich das Kraftfahrzeug im Zugbetrieb befindet, werden Steuerbefehle für Zug-Hochschaltungen und/oder Zug-Rückschaltungen in Abhängigkeit von dem Fahrwiderstandsprofil $F_{FW}(x_F)$ abgeleitet und unter anderem zur Ansteuerung von Schaltaktuatoren genutzt. Diese Vorgehensweise ist in allgemeiner Form z.B. aus der DE 10 2005 050 753 A1 bekannt.

Das Verfahren gemäß der Erfindung umfasst nun die Ableitung konkreter Steuerbefehle für Zug-Hochschaltungen und/oder Zug-Rückschaltungen in Abhängigkeit des Fahrwiderstandsprofils $F_{FW}(x_F)$ und deren Umsetzung innerhalb der Getriebesteuerung eines automatisierten Stufenschaltgetriebes. Hierzu wird aus dem Fahrwiderstandsprofil $F_{FW}(x_F)$ für den vorausliegenden Streckenabschnitt sowie Betriebsparametern des Antriebsmotors und des Stufenschaltgetriebes ein Grenzgangverlauf $G_{Gr}(x_F)$ bestimmt, der aus der Abfolge des jeweils höchsten Gangs gebildet ist, in dem die an den Antriebsrädern des Kraftfahrzeugs wirksame Zugkraft des Antriebsmotors jeweils größer als der Fahrwiderstand $F_{FW}(x_F)$ ist.

Dieser Grenzgangverlauf $G_{Gr}(x_F)$ wird dann zur Ableitung von Steuerbefehlen für eine Zug-Hochschaltung und/oder Zug-Rückschaltung bewertet. Dies bedeutet, dass anhand der Schaltungen und der Verweildauer in den Gängen des derart ermittelten Grenzgangverlaufs $G_{Gr}(x_F)$ entschieden wird, ob abweichend bzw. ergänzend zu der normalen Schaltsteuerung eine Zug-Hochschaltung und/oder eine Zug-Rückschaltung grundsätzlich freigegeben, gesperrt oder zumindest verzögert, oder vorzeitig ausgelöst werden soll. Auf dieser Grundlage können auf einfache Weise eindeutige Entscheidungskriterien für die Auslösung bzw. Nichtauslösung von Zugschaltungen abgeleitet werden.

Zur Ermittlung des Grenzgangverlaufs $G_{Gr}(x_F)$ wird zunächst der Verlauf der Fahrwiderstandsübersetzung $i_{FW}(x_F)$ für den vorausliegenden Streckenabschnitt, bei der die an den Antriebsrädern des Kraftfahrzeugs wirksame Zugkraft des Antriebsmotors jeweils dem Fahrwiderstand $F_{FW}(x_F)$ entspricht, nach der Gleichung

$$i_{FW}(x_F) = F_{FW}(x_F) / (M_{Mot} * i_{TA} / r_{RA} * \eta_{TS})$$

mit der Fahrstreckenvariablen $x_F$, dem Motormoment $M_{Mot}$, der Übersetzung der Antriebsachse $i_{TA}$, dem Radius der Antriebsräder $r_{RA}$, und dem Wirkungsgrad des Antriebsstrangs $\eta_{TS}$ aus dem Fahrwiderstandsprofil $F_{FW}(x_F)$ berechnet.

Daraus werden dann die Gänge des Grenzgangverlaufs $G_{Gr}(x_F)$ als die höchsten Gänge bestimmt, deren Übersetzung $i_{G\_Gr}$ jeweils größer als die Fahrwider- , standsübersetzung $i_{FW}(x_F)$ ist ($i_{G-Gr} > i_{FW}(x_{F))}$. Hierdurch ergeben sich automatisch die Schaltpunkte, an denen innerhalb des Grenzgangverlaufs $G_{Gr}(x_F)$ eine Zug-Hochschaltung oder Zug-Rückschaltung vorgesehen ist.

Die Steuerbefehle für eine Zug-Hochschaltung und/oder Zug-Rückschaltung werden vorteilhaft jeweils durch den Ersatz mindestens eines steuerungsrelevanten Wertes eines aktuellen Betriebsparameters durch einen in geeigneter Weise bestimmten oder modifizierten Wert an eine Schaltsteuerung des Stufenschaltgetriebes übermittelt. Es wird somit nur mindestens ein Eingangsparameter der normalen Schaltsteuerung verändert. Die normale Schaltsteuerung kann somit unverändert beibehalten werden, und eine Umschaltung zwischen mehreren Steuerungsprogrammen und/oder Schaltkennlinien wird vermieden.

Als hierzu geeignete Betriebsparameter können der aktuelle Fahrerwunsch (Leistungsanforderung des Fahrers oder eines Tempomaten) und der aktuelle Fahrwiderstand $F_{FW}(0)$ angesehen werden, so dass zur entsprechenden Beeinflussung des Schaltverhaltens des Stufenschaltgetriebes der Wert des aktuellen Fahrerwunsches und/oder der Wert des aktuellen Fahrwiderstands $F_{FW}(0)$ jeweils durch einen in geeigneter Weise bestimmten oder modifizierten Wert ersetzt wird.

Das Verfahren gemäß der Erfindung sieht vor, dass eine Zug-Hochschaltung grundsätzlich dann freigegeben wird, wenn der Grenzgang des Grenzgangverlaufs in der aktuellen Fahrzeugposition über dem aktuell eingelegten Gang liegt, und dieser Grenzgang in dem Grenzgangverlauf nachfolgend innerhalb einer vorgegebenen Grenz-Fahrzeit oder Grenz-Fahrstrecke nicht unterschritten wird.

Um zur Vermeidung eines starken Geschwindigkeits- und Zugkrafteinbruchs bedarfsweise eine möglichst frühe Zug-Rückschaltung zu ermöglichen, wird eine Zug-Rückschaltung dagegen dann freigegeben, wenn der Grenzgang des Grenzgangverlaufs in der aktuellen Fahrzeugposition dem aktuell eingelegten Gang entspricht, der Grenzgangverlauf nachfolgend innerhalb einer vorgegebenen Grenz-Fahrzeit oder Grenz-Wegstrecke eine Zug-Rückschaltung in einen niedrigeren Grenzgang vorsieht, und dieser Grenzgang in dem Grenzgangverlauf nachfolgend innerhalb einer vorgegebenen Grenz-Fahrzeit oder Grenz-Fahrstrecke nicht überschritten wird.

Zur Freigabe einer Zug-Hochschaltung und/oder einer Zug-Rückschaltung werden in diesem Fall die steuerungsrelevanten Werte der aktuellen Betriebsparameter unverändert beibehalten, d.h. die Auslösung der entsprechenden Schaltung erfolgt durch die normale Schaltsteuerung, indem die Schaltdrehzahl der betreffenden Schaltkennlinie erreicht oder überschritten bzw. unterschritten wird. Eine Beeinflussung des Schaltverhaltens erfolgt demnach nur dann, wenn aufgrund des Grenzgangverlaufs eine Sperrung oder Verzögerung oder eine vorzeitige Auslösung einer Zug-Hochschaltung oder einer Zug-Rückschaltung als vorteilhaft angesehen wird.

So ist vorgesehen, dass eine Zug-Hochschaltung dann gesperrt oder verzögert wird, wenn der Grenzgang des Grenzgangverlaufs in der aktuellen Fahrzeugposition über dem aktuell eingelegten Gang liegt, dieser Grenzgang in dem Grenzgangverlauf innerhalb der vorgegebenen Grenz-Fahrzeit oder Grenz-Fahrstrecke jedoch wieder unterschritten wird. In diesem Fall ist der Fahrwiderstand nur über eine kurze Fahrzeit oder Fahrstrecke abgesenkt, so dass dieser Streckenabschnitt ohne großen Geschwindigkeitsverlust noch in dem aktuell eingelegten Gang durchfahren werden kann, und somit die betreffende Hochschaltung und eine nachfolgende Rückschaltung vermieden werden können.

Die Sperrung oder Verzögerung der betreffenden Zug-Hochschaltung wird zweckmäßig dadurch erreicht, dass der Wert des aktuellen Fahrerwunsches durch den Volllastwert, d.h. 100%, ersetzt wird, und dass der Wert des aktuellen Fahrwiderstands durch den Wert des Fahrwiderstands an einem Wegpunkt vor dem Kraftfahrzeug oder durch den über einen Streckenbereich vor dem Kraftfahrzeug gemittelten Wert des Fahrwiderstands ersetzt wird, in dem der Grenzgang des Grenzgangverlaufs dem aktuell eingelegten Gang entspricht.

Dagegen wird eine Zug-Hochschaltung erfindungsgemäß bevorzugt dann vorzeitig, d.h. vor dem Erreichen oder Überschreiten der betreffenden Schaltdrehzahl oder auch vor dem Schaltvorgang innerhalb des Grenzgangverlaufs, ausgelöst, wenn der Grenzgang des Grenzgangverlaufs in der aktuellen Fahrzeugposition um mindestens zwei Stufen über dem aktuell eingelegten Gang liegt, und dieser Grenzgang in dem Grenzgangverlauf über den gesamten vorausliegenden Streckenabschnitt von beispielsweise 400m, für den das Fahrwiderstandsprofil ermittelt wird, nicht unterschritten wird. Durch eine vorzeitige Zug-Hochschaltung bei abnehmendem Fahrwiderstand wird eine hohe Motordrehzahl vermieden und somit der Kraftstoffverbrauch und die Lärmemission des Antriebsmotors reduziert.

Alternativ dazu kann jedoch auch vorgesehen sein, dass eine Zug-Hochschaltung dann vorzeitig ausgelöst wird, wenn der Grenzgang des Grenzgangverlaufs in der aktuellen Fahrzeugposition um mindestens eine Stufe über dem aktuell eingelegten Gang liegt, und dieser Grenzgang in dem Grenzgangverlauf innerhalb einer vorgegebenen Grenz-Fahrzeit oder Grenz-Fahrstrecke nicht unterschritten wird. Die hierzu vorgesehene Grenz-Fahrzeit oder Grenz-Fahrstrecke kann identisch der Grenz-Fahrzeit bzw. Grenz-Fahrstrecke für die Freigabe einer Zug-Hochschaltung sein, oder identisch dem gesamten vorausliegenden Streckenabschnitt bzw. der dafür erforderlichen Fahrzeit sein, oder unterschiedlich dazu festgelegt sein.

Die vorzeitige Auslösung der betreffenden Zug-Hochschaltung wird zweckmäßig dadurch erreicht, dass der Wert des aktuellen Fahrerwunsches durch einen Teillastwert, z.B. 45%, und der Wert des aktuellen Fahrwider- , stands

4

durch den Wert des Fahrwiderstands an einem Wegpunkt vor dem Kraftfahrzeug oder durch einen über einen Streckenbereich vor dem Kraftfahrzeug gemittelten Wert des Fahrwiderstands ersetzt wird, in dem der Grenzgang des Grenzgangverlaufs gegenüber dem aktuell eingelegten Gang um zwei Stufen bzw. um eine Stufe erhöht ist.

Da eine vorzeitige Auslösung einer Zug-Hochschaltung im Fahrpedalbetrieb bevorzugt durch den Fahrer erfolgen sollte, z.B. indem dieser das Fahrpedal weiter in Richtung Vollgas auslenkt, kann vorgesehen sein, dass eine automatisiert erfolgende vorzeitige Auslösung einer Zug-Hochschaltung nur im Tempomatbetrieb ermöglicht und nur dann freigegeben wird, wenn die betreffende Sollgeschwindigkeit zuvor schon einmal erreicht wurde und aktuell unterschritten ist.

Für eine vorzeitige Auslösung und eine Sperrung oder Verzögerung einer Zug-Rückschaltung sieht das Verfahren gemäß der Erfindung vor, dass zusätzlich zumindest der Verlauf der Motordrehzahl des Antriebsmotors für den aktuell eingelegten Gang ausgehend von der aktuellen Motordrehzahl anhand des Fahrwiderstandsverlaufs vorhergesagt und bewertet wird.

Demzufolge ist vorgesehen, dass eine Zug-Rückschaltung dann gesperrt oder verzögert wird, wenn der Grenzgang des Grenzgangverlaufs in der aktuellen Fahrzeugposition dem aktuell eingelegten Gang entspricht, der Grenzgangverlauf nachfolgend innerhalb der vorgegebenen Grenz-Fahrzeit oder Grenz-Wegstrecke eine Zug-Rückschaltung in einen niedrigeren Grenzgang vorsieht, dieser Grenzgang in dem Grenzgangverlauf innerhalb der vorgegebenen Grenz-Fahrzeit oder Grenz-Fahrstrecke jedoch wieder überschritten wird, und/oder wenn der vorhergesagte Verlauf der Motordrehzahl innerhalb der vorgegebenen Grenz-Fahrzeit oder Grenz-Fahrstrecke eine vorgegebene untere Grenzdrehzahl nicht unterschreitet und/oder ein prognostizierter Drehzahlabfall der Motordrehzahl zu einem aktuellen Motordrehzahlabfall innerhalb der vorgegebenen Grenz-Fahrzeit oder Grenz-Fahrstrecke kleiner als ein vorgebbarer Grenzwert ist. Diese Betriebssituation liegt bevorzugt vor dem Überfahren einer Bergkuppe vor, die gegebenenfalls ohne großen Geschwindigkeitsverlust noch in dem aktuell eingelegten Gang überfahren werden kann, wodurch die betreffende Rückschaltung und eine nachfolgende Hochschaltung vermieden werden können.

Die Sperrung oder Verzögerung einer Zug-Rückschaltung wird zweckmäßig dadurch erreicht, dass der Wert des aktuellen Fahrerwunsches durch einen reduzierten Wert, z.B. 80%, und der Wert des aktuellen Fahrwiderstands durch den Wert des Fahrwiderstands an einem Wegpunkt vor dem Kraftfahrzeug oder durch einen über einen Streckenbereich vor dem Kraftfahrzeug gemittelten Wert des Fahrwiderstands ersetzt wird, in dem der Grenzgang des Grenzgangverlaufs dem aktuell eingelegten Gang und/oder einem höheren Gang entspricht.

Eine Zug-Rückschaltung wird erfindungsgemäß dann vorzeitig ausgelöst, d.h. vor dem Erreichen oder Unterschreiten der betreffenden Schaltdrehzahl oder auch vor dem betreffenden Schaltvorgang innerhalb des Grenzgangverlaufs, wenn der Grenzgang des Grenzgangverlaufs in der aktuellen Fahrzeugposition dem aktuell eingelegten Gang entspricht, der Grenzgangverlauf nachfolgend innerhalb einer vorgegebenen Grenz-Fahrzeit oder Grenz-Wegstrecke eine Zug-Rückschaltung in einen niedrigeren Grenzgang vorsieht, und dieser Grenzgang in dem Grenzgangverlauf innerhalb einer vorgegebenen Grenz-Fahrzeit oder Grenz-Fahrstrecke nicht überschritten wird, und/oder wenn der vorhergesagte Verlauf der Motordrehzahl innerhalb der vorgegebenen Grenz-Fahrzeit oder Grenz-Fahrstrecke die vorgegebene untere Grenzdrehzahl unterschreitet und/oder ein prognostizierter Drehzahlabfall der Motordrehzahl zu einem aktuellen Motordrehzahlabfall innerhalb der vorgegebenen Grenz-Fahrzeit oder Grenz-Fahrstrecke größer als ein vorgegebener Grenzwert ist. Diese Betriebssituation liegt insbesondere vor der Einfahrt in eine längere Steigung oder in einen steileren Streckenabschnitt vor, wobei durch die vorzeitige Zug-Rückschaltung eine höhere Fahrgeschwindigkeit in der Steigung erzielt und weitere Rückschaltungen vermieden werden können. Die hierzu vorgesehenen Grenz-Fahrzeiten oder Grenz-Fahrstrecken können identisch den Grenz-Fahrzeiten bzw. Grenz-Fahrstrecken für die Freigabe einer Zug-Rückschaltung sein oder unterschiedlich dazu definiert sein.

Die vorzeitige Auslösung der betreffenden Zug-Rückschaltung wird zweckmäßig dadurch erreicht, dass der Wert des aktuellen Fahrerwunsches durch den Volllastwert, d.h. 100%, und der Wert des aktuellen Fahrwiderstands durch den Wert des Fahrwiderstands an einem Wegpunkt vor dem Kraftfahrzeug oder durch den über einen Streckenbereich vor dem Kraftfahrzeug gemittelten Wert des Fahrwiderstands ersetzt wird, in dem der Grenzgang des Grenzgangverlaufs niedriger als der aktuell eingelegte Gang ist.

Zur vorzeitigen Auslösung einer Zug-Rückschaltung kann die Zeitspanne oder die Wegstrecke bis zur Rückschaltung innerhalb des Grenzgangverlaufs ermittelt werden, und die Zug-Rückschaltung, sofern sie nicht sofort ausgelöst werden soll, nach Ablauf eines vorgegebenen Teils der Zeitspanne oder der Wegstrecke, z.B. bei 70% der Zeitspanne oder der Wegstrecke, ausgelöst werden.

Zudem kann vorgesehen sein, dass eine Zug-Rückschaltung vor dem Ablauf des vorgesehenen Teils der Zeitspanne oder der Wegstrecke ausgelöst wird, wenn die Motordrehzahl des Antriebsmotors bis dahin eine vorgegebene untere Grenzdrehzahl erreicht oder unterschreitet. Die Zug-Rückschaltung wird somit durch das zuerst eintretende Ereignis ausgelöst, d.h. entweder durch den Ablauf des vorgegebenen Teils der Zeitspanne oder Wegstrecke, oder durch das Erreichen oder Unterschreiten der unteren Grenzdrehzahl durch die Motordrehzahl des Antriebsmotors.

Zur Verdeutlichung der Erfindung ist der Beschreibung eine Zeichnung mit Ausführungsbeispielen beigefügt. In dieser zeigt

Fig. 1     ein dreiteiliges Diagramm mit einem Fahrwiderstandsverlauf und einem Zugkraftverlauf (Teil a), einem Grenzgangverlauf (Teil b), und einem Motordrehzahlverlauf (Teil c), jeweils über der Fahrstrecke, zur Erläuterung der Ermittlung des Grenzgangverlaufs bei sinkendem Fahrwiderstand,

Fig. 2     ein dreiteiliges Diagramm mit einem Fahrwiderstandsverlauf und einem Zugkraftverlauf (Teil a), einem Grenzgangverlauf (Teil b), und einem Motordrehzahlverlauf (Teil c), jeweils über der Fahrstrecke, zur Erläuterung der Freigabe einer Zug-Hochschaltung,

Fig. 3     ein dreiteiliges Diagramm mit einem Fahrwiderstandsverlauf und einem Zugkraftverlauf (Teil a), einem Grenzgangverlauf (Teil b), und einem Motordrehzahlverlauf (Teil c), jeweils über der Fahrstrecke, zur Erläuterung der Sperrung einer Zug-Hochschaltung,

Fig. 4     ein dreiteiliges Diagramm mit einem Fahrwiderstandsverlauf und einem Zugkraftverlauf (Teil a), einem Grenzgangverlauf (Teil b), und einem Motordrehzahlverlauf (Teil c), jeweils über der Fahrstrecke, zur Erläuterung der Ermittlung des Grenzgangverlaufs bei steigendem Fahrwiderstand,

Fig. 5     ein dreiteiliges Diagramm mit einem Fahrwiderstandsverlauf und einem Zugkraftverlauf (Teil a), einem Grenzgangverlauf (Teil b), und einem Motordrehzahlverlauf (Teil c), jeweils über der Fahrstrecke, zur Erläuterung der vorzeitigen Auslösung einer Zug-Rückschaltung, und

Fig. 6     ein dreiteiliges Diagramm mit einem Fahrwiderstandsverlauf und einem Zugkraftverlauf (Teil a), einem Grenzgangverlauf (Teil b), und einem Motordrehzahlverlauf (Teil c), jeweils über der Fahrstrecke, zur Erläuterung der Sperrung einer Zug-Rückschaltung.

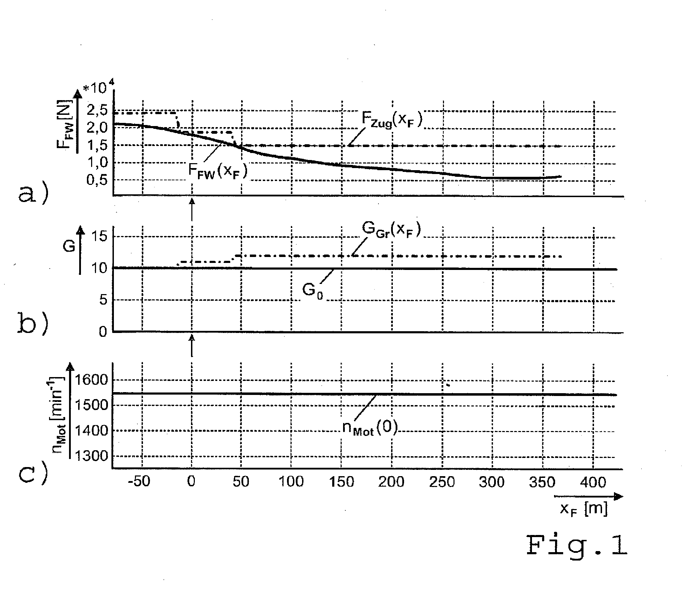

In Fig. 1 ist in Teil a) das aus topographischen Daten, insbesondere dem Höhenprofil, eines einem Kraftfahrzeug vorausliegenden Streckenabschnitts bestimmte Fahrwiderstandsprofil $F_{FW}(x_F)$ des betreffenden Kraftfahrzeugs über der Fahrstrecke $x_F$ abgebildet, wobei die aktuelle Fahrzeugposition dem Wegpunkt $x_F = 0$ entspricht. Bei dem Kraftfahrzeug handelt es sich um ein schweres Nutzfahrzeug mit einer Fahrzeugmasse von $m_{Fzg} = 40000$ kg. In Teil b) von Fig. 1 ist mit $G_0 = 10$ der aktuell eingelegte Gang angegeben. In Teil c) von Fig. 1 ist mit $n_{Mot}(0) = 1540$ min$^{-1}$ die aktuelle Motordrehzahl des Antriebsmotors dargestellt.

Aus dem Fahrwiderstandsprofil $F_{FW}(x_F)$ ist nun für den vorausliegenden Streckenabschnitt ein in Teil b) von Fig. 1 abgebildeter Grenzgangverlauf $G_{Gr}(x_F)$ als Abfolge des jeweils höchsten Gangs bestimmt worden, in dem die an den Antriebsrädern des Kraftfahrzeugs wirksame Zugkraft $F_{Zug}$ jeweils größer als der Fahrwiderstand $F_{FW}$ ist. Insofern stellt der Zugkraftverlauf $F_{Zug} = f(x_F)$ die größtmögliche Zugkraft in dem jeweiligen Grenzgang bei vorgegebener Motordrehzahl $n_{Mot}$ dar. Die Berechnung des Grenzgangverlaufs $G_{Gr}(x_F)$ erfolgte hier vereinfachend mit dem Drehmoment $M_{Mot}$ des Antriebsmotors bei der konstant angenommenen aktuellen Motordrehzahl $n_{Mot}(0)$. Zur Verdeutlichung ist der entsprechende Zugkraftverlauf $F_{Zug}(x_F)$ auch in Teil a) von Fig. 1 eingezeichnet.

Vorliegend befindet sich das Kraftfahrzeug aktuell ($x_F = 0$) in einer Steigung mit einem Fahrwiderstand von etwa $F_{FW} = 18$ kN, was bei der Fahrzeugmasse von $m_{Fzg} = 40000$ kg einer Fahrbahnsteigung von etwa 4% und einer Fahrgeschwindigkeit von etwa $v_F = 60$ km/h entspricht. Im weiteren Verlauf der Fahrstrecke ($x_F > 0$) wird die Steigung flacher, so dass der Fahrwiderstand $F_{FW}$ sinkt und der Grenzgangverlauf $G_{Gr}(x_F)$ zwei mögliche Zug-Hochschaltungen zu Gang 11 und Gang 12 anzeigt. Aktuell wäre eine Zug-Hochschaltung in den elften Gang möglich, da dieser bei $x_F = 0$ innerhalb des Grenzgangverlaufs $G_{Gr}(x_F)$ schon vorliegt.

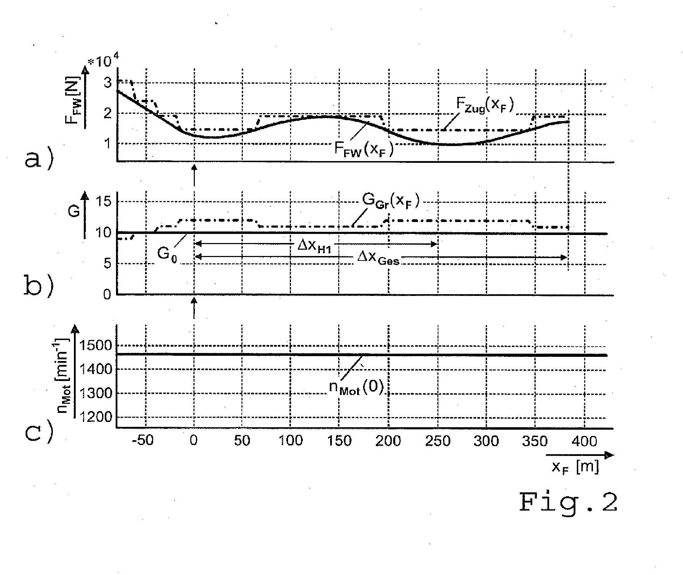

In den analog zu Fig. 1 aufgebauten Diagrammen a) bis c) von Fig. 2 ist beispielhaft eine Fahrsituation veranschaulicht, in der die Freigabe einer Zug-Hochschaltung erfolgen kann. Der in Teil a) von Fig. 2 abgebildete Fahrwiderstand $F_{FW}(x_F)$ sinkt aktuell ($x_F = 0$) ab und bleibt, mit Ausnahme eines kurzen Anstiegs zwischen der vorausliegenden Fahrstrecke $x_F = 70$ m bis $x_F = 180$ m, auf niedrigem Niveau. Der in Teil b) von Fig. 2 abgebildete Grenzgangverlauf $G_{Gr}(x_F)$ weist aktuell ($X_F = 0$) schon einen um zwei Gänge höheren Gang als der aktuell eingelegte Gang $G_0 = 10$ auf. Zudem ist dem weiteren Grenzgangverlauf $GG_r(x_F)$ zu entnehmen, dass der zu dem aktuell eingelegten Gang $G_0$ nächsthöhere Gang bis zum Ende der vor dem Kraftfahrzeug erfassten Fahrstrecke von etwa $\Delta X_{Ges} = 380$ m eingelegt bleiben könnte.

Zur Freigabe einer Zug-Hochschaltung ist in dem erfindungsgemäßen Verfahren vorgesehen, dass hierzu der Grenzgang $G_{Gr}(0)$ des Grenzgangverlaufs $G_{Gr}(x_F)$ in der aktuellen Position ($x_F = 0$) über dem aktuell eingelegten Gang $G_0$ liegen muss ($G_{Gr}(0) > G_0$), und dass dieser Grenzgang $G_{Gr}(0)$ in dem Grenzgangverlauf $G_{Gr}(x_F)$ innerhalb einer vorgegebenen Grenz-Fahrstrecke $\Delta x_{H1}$ nicht unterschritten werden darf. Ist diese Grenz-Fahrstrecke beispielsweise auf $\Delta x_{H1} = 250$ m festgelegt, sind vorliegend beide Bedingungen erfüllt, so dass in diesem Fall die Zug-Hochschaltung in den nächsthöheren Gang $G = 11$ freigegeben wird. Die Auslösung der Zug-Hochschaltung erfolgt ohne weitere Maßnahmen durch die normale Schaltsteuerung, wenn die entsprechende Schaltdrehzahl erreicht oder überschritten wird.

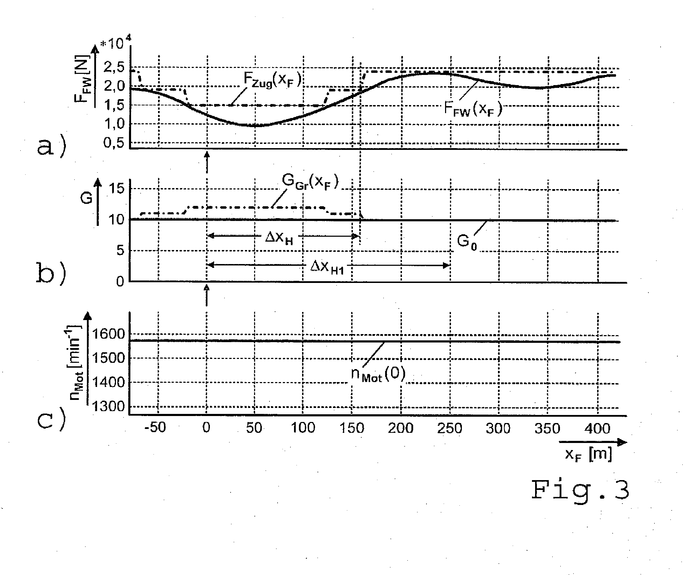

Demgegenüber befindet sich das Kraftfahrzeug nach den Diagrammen a) bis c) von Fig. 3 in einer Fahrsituation, in welcher der in Teil b) von Fig. 3 abgebildete Grenzgangverlauf $G_{Gr}(x_F)$ zwar aktuell ($x_F = 0$) gegenüber dem aktuell eingelegten Gang ($G_0 = 10$) einen um zwei Gänge höheren Grenzgang anzeigt ($Gr(0)=G_0+2=12$), jedoch selbst der nächsthöhere Gang ($G = 11$) nur über einen Streckenbereich von etwa $\Delta x_H = 160$ m gehalten werden kann, bevor die Zugkraft $F_{Zug}$ des Antriebsmotors in diesem Gang ($G = 11$) unter den Fahrwiderstand $F_{FW}$ sinken würde. Da dieser Streckenbereich aber unter der vorliegend festgelegten Grenz-Fahrstrecke von $\Delta x_{H1} = 250$ m liegt, wird in diesem Fall die Zug-Hochschaltung in den nächsthöheren Gang $G = 11$ gesperrt.

Die Sperrung der Zug-Hochschaltung wird dadurch bewirkt, dass zwei steuerungsrelevante Eingangswerte der normalen Schaltsteuerung durch in geeigneter Weise bestimmte oder modifizierte Werte ersetzt werden. Konkret werden hierzu der Wert des aktuellen Fahrerwunsches durch den Volllastwert (100%) und der Wert des aktuellen Fahrwiderstands $F_{FW}(0)$ durch den Wert des Fahrwiderstands an einem Wegpunkt vor dem Kraftfahrzeug oder durch den über einen Streckenbereich vor dem Kraftfahrzeug gemittelten Wert des Fahrwiderstands ersetzt, in dem der Grenzgang $G_{Gr}$ des Grenzgangverlaufs $G_{Gr}(x_F)$ dem aktuell eingelegten Gang $G_0$ entspricht ($G_{Gr}=G_0$).

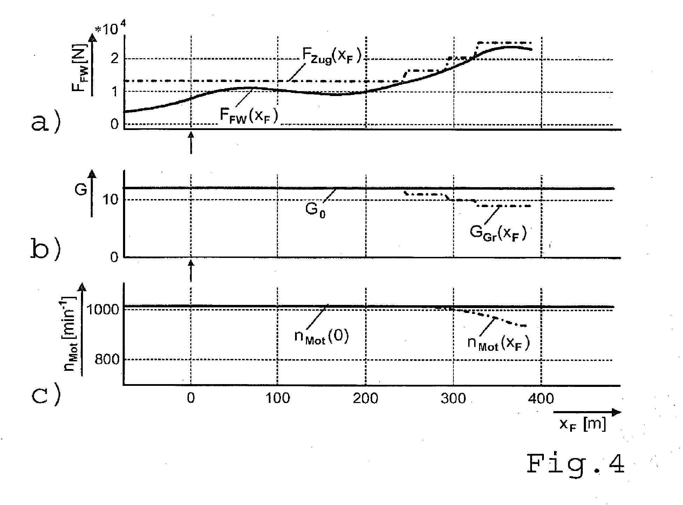

Analog zu Fig. 1 ist in Teil a) von Fig. 4 das aus topographischen Daten, insbesondere aus dem Höhenprofil, eines einem Kraftfahrzeug vorausliegenden Streckenabschnitts bestimmte Fahrwiderstandsprofil $F_{FW}(x_F)$ des betreffenden Kraftfahrzeugs über der Fahrstrecke $x_F$ abgebildet. Vorliegend befindet sich das Kraftfahrzeug kurz vor einer Steigung, die zunächst etwa 2% beträgt und im weiteren Verlauf auf etwa 7% zunimmt. Aktuell ($x_F = 0$) ist der zwölfte Gang ($G_0 = 12$) eingelegt. Daher reicht die an den Antriebsrädern wirksame Zugkraft $F_{Zug}$ des Antriebsmotors ab etwa 240 m vor dem Kraftfahrzeug in dem aktuell eingelegten Gang $G_0$ nicht mehr aus, um den Fahrwiderstand $F_{FW}$ des Kraftfahrzeugs zu kompensieren.

Demzufolge sieht der aus dem Fahrwiderstandsprofil $F_{FW}(x_F)$ bestimmte und in Teil b) von Fig. 4 abgebildete Grenzgangverlauf $G_{Gr}(x_F)$ ab diesem Wegpunkt ($x_F=240$ m) mehrere Zug-Rückschaltungen vor. Der entsprechende Zugkraftverlauf $F_{Zug}(x_F)$ ist zusätzlich in Teil a) von Fig. 4 eingezeichnet. Um einen in Teil c) von Fig. 4 abgebildeten Abfall der Motordrehzahl $n_{Mot}(x_F)$ und einen entsprechenden Geschwindigkeitsverlust zu vermeiden, wäre in diesem Fall jedoch eine vorzeitige Auslösung einer Zug-Rückschaltung vorteilhaft, da dann mit höherer Motordrehzahl und entsprechend erhöhter Zugkraft in den steileren Streckenabschnitt der Steigung eingefahren würde. Somit könnte zumindest eine der in dem ermittelten Grenzgangverlauf $G_{Gr}(x_F)$ vorgesehenen Zug-Rückschaltungen vermieden werden.

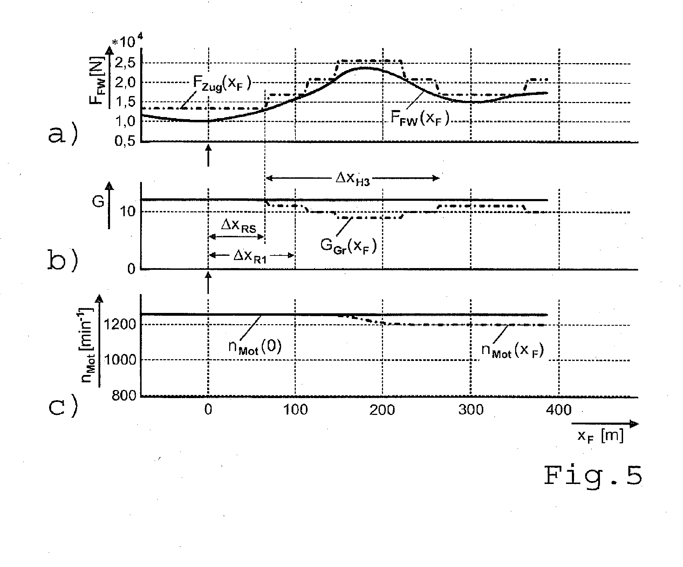

In den analog zu Fig. 4 aufgebauten Diagrammen von Fig. 5 ist beispielhaft eine Fahrsituation veranschaulicht, in der die Freigabe und die vorzeitige Auslösung einer Zug-Rückschaltung erfolgt. Der in Teil a) von Fig. 5 abgebildete Fahrwiderstand $F_{FW}(x_F)$ steigt entsprechend einer vorausliegenden Bergkuppe etwa 70 m vor dem Kraftfahrzeug relativ stark an, fällt ab dem Wegpunkt $x_F = 180$ m wieder etwas ab, und bleibt dann über den restlichen Teil des erfassten Streckenabschnitts auf einem gegenüber dem aktuellen Fahrwiderstand $F_{FW}(0)$ erhöhten Niveau. Demzufolge sehen der in Teil b) von Fig. 5 abgebildete Grenzgangverlauf $G_{Gr}(x_F)$ und der zusätzlich in Teil a) von Fig. 5 eingezeichnete Zugkraftverlauf $F_{Zug}(x_F)$ nach einer Wegstrecke von $\Delta x_{RS} = 70$ m eine erste Zug-Rückschaltung von dem aktuell eingelegten zwölften Gang ($G_0 = 12$) in den nächstniedrigeren elften Gang vor. Zudem ist dem Grenzgangverlauf $G_{Gr}(x_F)$ zu entnehmen, dass dieser Gang ($G_{Gr}=11$) bis zum Ende des vor dem Kraftfahrzeug erfassten Streckenabschnitts von etwa $\Delta x_{Ges} = 380$ m nicht mehr überschritten wird.

Demzufolge wird die betreffende Zug-Rückschaltung freigegeben, sofern die Wegstrecke $\Delta x_{RS}$ bis zur vorgesehenen Rückschaltung kleiner als eine vorgegebene Grenz-Wegstrecke $\Delta x_{R1}$ ist ($\Delta x_{RS}<\Delta x_{R1}$), und dieser Grenzgang ($G_{Gr} = 11$) in dem Grenzgangverlauf $G_{Gr}(x_F)$ nachfolgend innerhalb einer vorgegebenen Grenz-Fahrstrecke $\Delta x_{H3}$ nicht überschritten wird. Vorliegend wird beispielhaft von einer Grenz-Wegstrecke von $\Delta x_{R1}=100$m und einer Grenz-Fahrstrecke $\Delta x_{H3} = 200$ m ausgegangen, so dass beide Bedingungen erfüllt sind, und die Zug-Rückschaltung in den elften Gang freigegeben wird.

Dieselben oder ähnliche Kriterien können auch zur vorzeitigen, d.h. vor dem Erreichen oder Überschreiten der betreffenden Schaltdrehzahl oder auch vor dem Schaltvorgang innerhalb des Grenzgangverlaufs $G_{Gr}(x_F)$ erfolgenden Auslösung der betreffenden Zug-Rückschaltung verwendet werden, wobei die Auslösung sofort oder nach Ablauf eines vorgegebenen Teils der ermittelten Wegstrecke $\Delta x_{RS}$ erfolgen kann.

Die vorzeitige Auslösung der Zug-Rückschaltung wird dadurch bewirkt, dass zwei steuerungsrelevante Eingangswerte der normalen Schaltsteuerung, nämlich der Wert des aktuellen Fahrerwunsches und der Wert des aktuellen Fahrwiderstands $F_{FW}(0)$, durch den Volllastwert (100%) des Fahrerwunsches bzw. durch den Wert des Fahrwiderstands an einem Wegpunkt vor dem Kraftfahrzeug oder durch den über einen Streckenbereich vor dem Kraftfahrzeug gemittelten Wert des Fahrwiderstands, in dem der Grenzgang $G_{Gr}$ des Grenzgangverlaufs $G_{Gr}(x_F)$ niedriger als der aktuell eingelegte Gang $G_0$ ist ($G_{Gr}<G_0$), ersetzt werden.

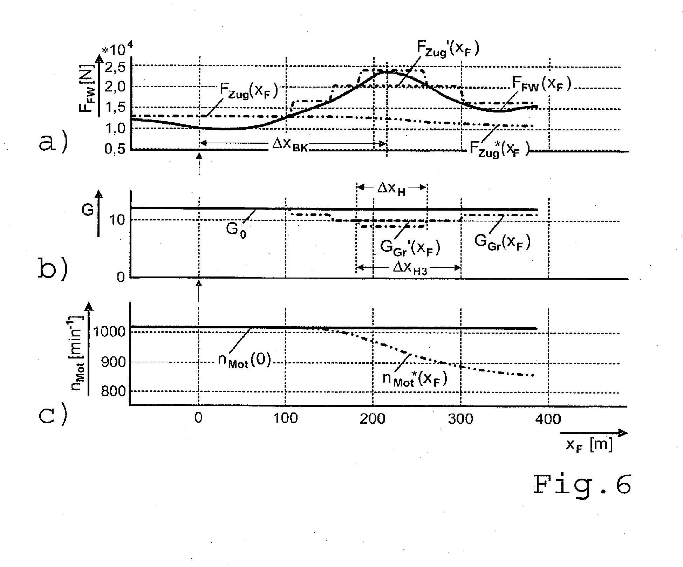

In den Diagrammen a) bis c) von Fig. 6 befindet sich das Kraftfahrzeug bei aktuell eingelegtem zwölften Gang ($G_0=12$) vor einem Hügel mit einer Bergkuppe, deren Gipfel im Abstand von etwa $\Delta x_{BK}=220$ m liegt. Der in Teil b) von Fig. 6 abgebildete Grenzgangverlauf $G_{Gr}(x_F)$ und der zusätzlich in Teil a) von Fig. 6 eingezeichnete Zugkraftverlauf $F_{Zug}(x_F)$ sehen daher drei Zug-Rückschaltungen bis in den neunten Gang und anschließend zwei Zug-Hochschaltungen bis in den elften Gang vor.

Da der neunte Gang in dem Grenzgangverlauf $G_{Gr}(x_F)$ aber nur über einen Streckenabschnitt von etwa $\Delta x_H = 70$ m gehalten wird und damit kleiner als die vorgesehene Grenz-Fahrstrecke von vorliegend $\Delta x_{H3} = 120$ m ist, wird die letzte Zug-Rückschaltung rechtzeitig gesperrt und damit auch die nachfolgende Zug-Hochschaltung vermieden. Demzufolge entspricht der tatsächliche Gang- und Zugkraftverlauf im Bereich der Bergkuppe dem in Teil a) und b) von Fig. 6 mit $G_{Gr}'(x_F)$ und $F_{Zug}'(_{XF})$ bezeichneten Verläufen.

Zur Sperrung der Zug-Rückschaltung in den neunten Gang wird dann, wenn der zehnte Gang eingelegt ist und die Auswertung des Fahrwiderstandsprofils $F_{FW}(x_F)$ das vorbeschriebene Resultat ergibt, der Wert des dann aktuellen Fahrerwunsches durch einen reduzierten Wert, z.B. 80%, und der Wert des dann aktuellen Fahrwiderstands durch den Wert des Fahrwiderstands an einem Wegpunkt vor dem Kraftfahrzeug oder durch einen über einen Streckenbereich vor dem Kraftfahrzeug gemittelten Wert des Fahrwiderstands ersetzt, in dem der Grenzgang $G_{Gr}$ des Grenzgangverlaufs $G_{GR}(x_F)$ dem dann aktuell eingelegten Gang $G_0$ und/oder einem hierzu höheren Gang entspricht ($G_{Gr} \geq G_0$).

Zur Verdeutlichung der Bedeutung von rechtzeitigen Zug-Rückschaltungen ist in Teil a) und Teil c) von Fig. 6 zusätzlich die Entwicklung der Zugkraft $F_{Zug}*(x_F)$ und der Motordrehzahl $n_{Mot}*(x_F)$ des Antriebsmotors für den Fall abgebildet, dass die in dem Grenzgangverlauf $G_{Gr}(x_F)$ vorgesehenen Schaltungen, insbesondere die Zug-Rückschaltungen, nicht durchgeführt werden.

<u>Bezugszeichen</u>

| | |
|---|---|
| $F_{FW}$ | Fahrwiderstand |
| $F_{FW}(0)$ | Aktueller Fahrwiderstand |
| $F_{Luft}$ | Luftwiderstand |
| $F_{Roll}$ | Rollwiderstand |
| $F_{Steig}$ | Steigungswiderstand |
| $F_{Zug}$ | Zugkraft |
| $F_{Zug}'$ | Zugkraft (ohne Rückschaltung) |
| $F_{Zug}*$ | Zugkraft (ohne Rückschaltungen) |
| $G$ | Gang |
| $G_0$ | Aktuell eingelegter Gang |
| $G_{Gr}$ | Grenzgang |
| $G_{Gr}(0)$ | Aktueller Grenzgang |
| $G_{Gr}'$ | Grenzgang (ohne Rückschaltung) |
| $i$ | Übersetzung |
| $i_{FW}$ | Fahrwiderstandsübersetzung |
| $i_{G\_Gr}$ | Übersetzung eines Grenzgangs |
| $i_{TA}$ | Übersetzung der Antriebsachse |
| $m_{Fzg}$ | Fahrzeugmasse |
| $M_{Mot}$ | Drehmoment des Antriebsmotors |
| $n_{Gr1}$ | Untere Grenzdrehzahl |
| $n_{Gr2}$ | Untere Grenzdrehzahl |
| $n_{Mot}$ | Motordrehzahl |
| $n_{Mot}(0)$ | Aktuelle Motordrehzahl |
| $n_{Mot}*$ | Motordrehzahl (ohne Rückschaltungen) |
| $r_{RA}$ | Radius der Antriebsräder |
| $t$ | Zeit |
| $v_F$ | Fahrgeschwindigkeit |
| $v_{Soll}$ | Sollgeschwindigkeit |
| $x_F$ | Fahrstreckenvariable |
| $\eta_{TS}$ | Wirkungsgrad des Antriebsstrangs |
| $\Delta t_{H1}$ | Grenz-Fahrzeit mit höherem Grenzgang |
| $\Delta t_{H2}$ | Grenz-Fahrzeit mit höherem Grenzgang |
| $\Delta t_{H3}$ | Grenz-Fahrzeit mit niedrigerem Grenzgang |
| $\Delta t_{H4}$ | Grenz-Fahrzeit mit niedrigerem Grenzgang |
| $\Delta t_{RS}$ | Zeitspanne bis zur vorgesehenen Rückschaltung |
| $\Delta t_{R1}$ | Grenz-Fahrzeit bis zur Rückschaltung |
| $\Delta t_{R2}$ | Grenz-Fahrzeit bis zur Rückschaltung |

| $\Delta x_{BK}$ | Wegstrecke bis zum Erreichen einer Bergkuppe |
| $\Delta x_{Ges}$ | Gesamter erfasster Streckenabschnitt |
| $\Delta x_H$ | Streckenbereich mit höherem oder niedrigerem Grenzgang |
| $\Delta x_{H1}$ | Grenz-Fahrstrecke mit höherem Grenzgang |
| $\Delta x_{H2}$ | Grenz-Fahrstrecke mit höherem Grenzgang |
| $\Delta x_{H3}$ | Grenz-Fahrstrecke mit niedrigerem Grenzgang |
| $Ax_{H4}$ | Grenz-Fahrstrecke mit niedrigerem Grenzgang |
| $\Delta x_{RS}$ | Wegstrecke bis zur vorgesehenen Rückschaltung |
| $\Delta x_{R1}$ | Grenz-Wegstrecke bis zur Rückschaltung |
| $\Delta x_{R2}$ | Grenz-Wegstrecke bis zur Rückschaltung |

**Patentansprüche**

1. Verfahren zur Schaltsteuerung eines automatisierten Stufenschaltgetriebes, das in einem Antriebsstrang eines Kraftfahrzeugs zwischen einem als Verbrennungsmotor ausgebildeten Antriebsmotor und einem Achsantrieb angeordnet ist, wobei während der Fahrt neben aktuellen fahrzeug-, fahrbahn- und fahrerspezifischen Betriebsparametern auch auf einen dem Kraftfahrzeug vorausliegenden Streckenabschnitt bezogene topographische Daten, insbesondere das Höhenprofil, ermittelt wird, daraus das Fahrwiderstandsprofil ($F_{FW}(x_F)$) des Kraftfahrzeugs für den vorausliegenden Streckenabschnitt bestimmt wird, und im Automatikmodus des Stufenschaltgetriebes während eines Zugbetriebs Steuerbefehle für Zug-Hochschaltungen und/oder Zug-Rückschaltungen in Abhängigkeit des Fahrwiderstandsprofils ($F_{FW}(x_F)$) abgeleitet und umgesetzt werden, **dadurch gekennzeichnet, dass** aus dem Fahrwiderstandsprofil ($F_{FW}(x_F)$) für den vorausliegenden Streckenabschnitt sowie Betriebsparametern des Antriebsmotors und des Stufenschaltgetriebes ein Grenzgangverlauf ($G_{Gr}(x_F)$) bestimmt wird, der aus der Abfolge des jeweils höchsten Gangs gebildet ist, in dem die an den Antriebsrädern des Kraftfahrzeugs wirksame Zugkraft des Antriebsmotors jeweils größer als der Fahrwiderstand ($F_{FW}(x_F)$) ist, und dass der Grenzgangverlauf ($G_{Gr}(x_F)$) zur Ableitung von Steuerbefehlen für eine Zug- Hochschaltungen und/oder Zug-Rückschaltung bewertet wird.

2. Verfahren nach Anspruch 1, **dadurch gekennzeichnet, dass** aus dem Fahrwiderstandsprofil $F_{FW}(x_F)$ für den vorausliegenden Streckenabschnitt der Verlauf einer Fahrwiderstandsübersetzung $i_{FW}(x_F)$ nach der Gleichung

$$i_{FW}(x_F) = F_{FW}(x_F) / (M_{Mot} * i_{TA} / r_{RA} * \eta_{TS})$$

berechnet wird, mit der Fahrstreckenvariablen $x_F$, dem Motormoment $M_{Mot}$, der Übersetzung der Antriebsachse $i_{TA}$, dem Radius der Antriebsräder $r_{RA}$ und dem Wirkungsgrad des Antriebsstrangs $\eta_{TS}$, bei der die an den Antriebsrädern des Kraftfahrzeugs wirksame Zugkraft des Antriebsmotors jeweils dem Fahrwiderstand $F_{FW}(x_F)$ entspricht, und dass daraus die Gänge des Grenzgangverlaufs $G_{Gr}(x_F)$ als die höchsten Gänge bestimmt werden, deren Übersetzung $i_{G-Gr}$ jeweils größer als die Fahrwiderstandsübersetzung $i_{G\_FW}(x_F)$ ist ($i_{G\_Gr} > i_{FW}(x_F)$).

3. Verfahren nach Anspruch 1 oder 2, **dadurch gekennzeichnet, dass** die Steuerbefehle für eine Zug-Hochschaltung und/oder Zug-Rückschaltung jeweils durch den Ersatz mindestens eines steuerungsrelevanten Wertes eines aktuellen Betriebsparameters durch einen in geeigneter Weise bestimmten oder modifizierten Wert an eine Schaltsteuerung des Stufenschaltgetriebes übermittelt werden.

4. Verfahren nach Anspruch 3, **dadurch gekennzeichnet, dass** zur Beeinflussung des Schaltverhaltens der Wert des aktuellen Fahrerwunsches (Leistungsanforderung des Fahrers oder eines Tempomaten) und/oder der Wert des aktuellen Fahrwiderstands ($F_{FW}(0)$) jeweils durch einen in geeigneter Weise bestimmten oder modifizierten Wert ersetzt wird.

5. Verfahren nach wenigstens einem der Ansprüche 1 bis 4, **dadurch gekennzeichnet, dass** eine Zug-Hochschaltung grundsätzlich dann freigegeben wird, wenn der Grenzgang ($G_{Gr}$) des Grenzgangverlaufs $G_{Gr}(x_F)$ in der aktuellen Fahrzeugposition ($t = 0$, $x_F = 0$) über dem aktuell eingelegten Gang ($G_0$) liegt ($G_{Gr}(0) > G_0$), und dieser Grenzgang ($G_{Gr}$) in dem Grenzgangverlauf $G_{Gr}(x_F)$ nachfolgend innerhalb einer vorgegebenen Grenz-Fahrzeit ($\Delta t_{H1}$) oder Grenz-Fahrstrecke ($\Delta x_{H1}$) nicht unterschritten wird.

6. Verfahren nach einem der Ansprüche 1 bis 5, **dadurch gekennzeichnet, dass** eine Zug-Rückschaltung grundsätzlich dann freigegeben wird, wenn der Grenzgang ($G_{Gr}$) des Grenzgangverlaufs $G_{Gr}(x_F)$ in der aktuellen Fahrzeugposition (t = 0, $x_F$ = 0) dem aktuell eingelegten Gang ($G_0$) entspricht ($G_{Gr}(0) = G_0$), der Grenzgangverlauf $G_{Gr}(x_F)$ nachfolgend innerhalb einer vorgegebenen Grenz-Fahrzeit ($\Delta t_{R1}$) oder Grenz-Wegstrecke ($\Delta x_{R1}$) eine Zug-Rück-schaltung in einen niedrigeren Grenzgang vorsieht ($G_{Gr}<G_0$), und dieser Grenzgang ($G_{Gr}$) in dem Grenzgangverlauf $G_{Gr}(x_F)$ nachfolgend innerhalb einer vorgegebenen Grenz-Fahrzeit ($\Delta t_{H3}$) oder Grenz-Fahrstrecke ($\Delta x_{H3}$) nicht über-schritten wird.

**7.** Verfahren nach Anspruch 5 oder 6, **dadurch gekennzeichnet, dass** zur Freigabe einer Zug-Hochschaltung und/oder einer Zug-Rückschaltung die steuerungsrelevanten Werte der aktuellen Betriebsparameter unverändert beibehalten werden.

**8.** Verfahren nach einem der Ansprüche 1 bis 7, **dadurch gekennzeichnet, dass** eine Zug-Hochschaltung dann gesperrt oder verzögert wird, wenn der Grenzgang ($G_{Gr}$) des Grenzgangverlaufs $G_{Gr}(x_F)$ in der aktuellen Fahrzeugposition (t = 0, $x_F$ = 0) über dem aktuell eingelegten Gang ($G_0$) liegt ($G_{Gr}(0)>G_0$), dieser Grenzgang ($G_{Gr}$) in dem Grenzgangverlauf $G_{Gr}(x_F)$ innerhalb der vorgegebenen Grenz-Fahrzeit ($\Delta t_{H1}$) oder Grenz-Fahrstrecke ($\Delta x_{H1}$) jedoch wieder unterschritten wird.

**9.** Verfahren nach Anspruch 8, **dadurch gekennzeichnet, dass** zur Sperrung oder Verzögerung einer Zug-Hochschaltung der Wert des aktuellen Fahrerwunsches durch den Volllastwert (100%) und der Wert des aktuellen Fahrwiderstands ($F_{FW}(0)$) durch den Wert des Fahrwiderstands an einem Wegpunkt vor dem Kraftfahrzeug oder durch den über einen Streckenbereich vor dem Kraftfahrzeug gemittelten Wert des Fahrwiderstands ersetzt wird, in dem der Grenzgang ($G_{Gr}$) des Grenzgangverlaufs $G_{Gr}(x_F)$ dem aktuell eingelegten Gang ($G_0$) entspricht ($G_{Gr}=G_0$).

**10.** Verfahren nach einem der Ansprüche 1 bis 9, **dadurch gekennzeichnet, dass** eine Zug-Hochschaltung dann vorzeitig ausgelöst wird, wenn der Grenzgang ($G_{Gr}$) des Grenzgangverlaufs $G_{Gr}(x_F)$ in der aktuellen Fahrzeugposition (t = 0, $x_F$ = 0) um mindestens zwei Stufen über dem aktuell eingelegten Gang ($G_0$) liegt ($G_{Gr}(0) \geq G_0 + 2$), und dieser Grenzgang ($G_{Gr}$) in dem Grenzgangverlauf $G_{Gr}(x_F)$ über den gesamten vorausliegenden Streckenab-schnitt ($\Delta x_{Ges}$) nicht unterschritten wird.

**11.** Verfahren nach einem der Ansprüche 1 bis 9, **dadurch gekennzeichnet, dass** eine Zug-Hochschaltung dann vorzeitig ausgelöst wird, wenn der Grenzgang ($G_{Gr}$) des Grenzgangverlaufs $G_{Gr}(x_F)$ in der aktuellen Fahrzeugposition (t = 0, $x_F$ = 0) um mindestens eine Stufe über dem aktuell eingelegten Gang($G_0$) liegt ($G_{Gr}(0) \geq G_0+1$), und dieser Grenzgang ($G_{Gr}$) in dem Grenzgangverlauf $G_{Gr}(x_F)$ innerhalb einer vorgegebenen Grenz-Fahrzeit ($\Delta t_{H2}$) oder Grenz-Fahrstrecke ($\Delta x_{H2}$) nicht unterschritten wird.

**12.** Verfahren nach Anspruch 10 oder 11, **dadurch gekennzeichnet, dass** zur vorzeitigen Auslösung einer Zug-Hochschaltung der Wert des aktuellen Fahrerwunsches durch einen Teillastwert (z.B. 45%) und der Wert des aktuellen Fahrwiderstands ($F_{FW}(0)$) durch den Wert des Fahrwiderstands an einem Wegpunkt vor dem Kraftfahrzeug oder durch einen über einen Streckenbereich vor dem Kraftfahrzeug gemittelten Wert des Fahrwiderstands ersetzt wird, in dem der Grenzgang ($G_{Gr}$) des Grenzgangverlaufs $G_{Gr}(x_F)$ gegenüber dem aktuell eingelegten Gang ($G_0$) um zwei Stufen bzw. um eine Stufe erhöht ist ($G_{Gr}$ = Go +2; $G_{Gr}=G_0+1$).

**13.** Verfahren nach einem der Ansprüche 10 bis 12, **dadurch gekennzeichnet, dass** eine vorzeitige Auslösung einer Zug-Hochschaltung nur im Tempomatbetrieb ermöglicht und nur dann freigegeben wird, wenn die betreffende Sollgeschwindigkeit ($v_{Soll}$) zuvor schon einmal erreicht wurde und aktuell unterschritten ist ($v_F(0) < v_{Soll}$).

**14.** Verfahren nach einem der Ansprüche 1 bis 13, **dadurch gekennzeichnet, dass** für eine vorzeitige Auslösung und eine Sperrung oder Verzögerung einer Zug-Rückschaltung zusätzlich zumindest der Verlauf der Motordrehzahl ($n_{Mot}^*(x_F)$) des Antriebsmotors für den aktuell eingelegten Gang ($G_0$) ausgehend von der aktuellen Motordrehzahl ($n_{Mot}(0)$) anhand des Fahrwiderstandsverlaufs $F_{FW}(x_F)$ vorhergesagt und bewertet wird.

**15.** Verfahren nach einem der Ansprüche 1 bis 14, **dadurch gekennzeichnet, dass** eine Zug-Rückschaltung dann gesperrt oder verzögert wird, wenn der Grenzgang ($G_{Gr}$) des Grenzgangverlaufs $G_{Gr}(x_F)$ in der aktuellen Fahrzeugposition (t=0, $x_F$=0) dem aktuell eingelegten Gang ($G_0$) entspricht ($G_{Gr}(0)=G_0$), der Grenzgangverlauf $G_{Gr}(x_F)$ nachfolgend innerhalb der vorgegebenen Grenz-Fahrzeit ($\Delta t_{R1}$) oder Grenz-Wegstrecke ($\Delta x_{R1}$) eine Zug-Rückschaltung in einen niedrigeren Grenzgang vorsieht ($G_{Gr} < G_0$), dieser Grenzgang ($G_{Gr}$) in dem Grenzgangverlauf $G_{Gr}(x_F)$ innerhalb der vorgegebenen Grenz-Fahrzeit ($\Delta t_{H3}$) oder Grenz-Fahrstrecke ($\Delta x_{H3}$) jedoch wieder überschritten wird, und/oder wenn der vorhergesagte Verlauf der Motordrehzahl ($n_{Mot}^*(x_F)$) innerhalb der vorgegebenen Grenz-Fahrzeit

($\Delta t_{H3}$) oder Grenz-Fahrstrecke ($\Delta x_{H3}$) eine vorgegebene untere Grenzdrehzahl ($n_{Gr1}$) nicht unterschreitet.

16. Verfahren nach Anspruch 15, **dadurch gekennzeichnet, dass** zur Sperrung oder Verzögerung einer Zug-Rückschaltung der Wert des aktuellen Fahrerwunsches durch einen reduzierten Wert (z.B. 80%) und der Wert des aktuellen Fahrwiderstands ($F_{FW}(0)$) durch den Wert des Fahrwiderstands an einem Wegpunkt vor dem Kraftfahrzeug oder durch einen über einen Streckenbereich vor dem Kraftfahrzeug gemittelten Wert des Fahrwiderstands ersetzt wird, in dem der Grenzgang ($G_{Gr}$) des Grenzgangverlaufs $G_{Gr}(x_F)$ dem aktuell eingelegten Gang ($G_0$) und/oder einem höheren Gang entspricht ($G_{Gr} \geq G_0$).

17. Verfahren nach einem der Ansprüche 1 bis 16, **dadurch gekennzeichnet, dass** eine Zug-Rückschaltung dann vorzeitig ausgelöst wird, wenn der Grenzgang ($G_{Gr}$) des Grenzgangverlaufs $G_{Gr}(x_F)$ in der aktuellen Fahrzeugposition (t = 0, $x_F$ = 0) dem aktuell eingelegten Gang ($G_0$) entspricht ($G_{Gr}(0) = G_0$), der Grenzgangverlauf $G_{Gr}(x_F)$ nachfolgend innerhalb einer vorgegebenen Grenz-Fahrzeit ($\Delta t_{R2}$) oder Grenz-Wegstrecke ($\Delta x_{R2}$) eine Zug-Rückschaltung in einen niedrigeren Grenzgang vorsieht ($G_{Gr} < G_0$), und dieser Grenzgang ($G_{Gr}$) in dem Grenzgangverlauf $G_{Gr}(x_F)$ innerhalb einer vorgegebenen Grenz-Fahrzeit ($\Delta t_{H4}$) oder Grenz-Fahrstrecke ($\Delta x_{H4}$) nicht überschritten wird, und/oder wenn der vorhergesagte Verlauf der Motordrehzahl ($n_{Mot}^*(x_F)$) innerhalb der vorgegebenen Grenz-Fahrzeit ($\Delta t_{H4}$) oder Grenz-Fahrstrecke ($\Delta x_{H4}$) die vorgegebene untere Grenzdrehzahl ($n_{Gr1}$) unterschreitet.

18. Verfahren nach Anspruch 17, **dadurch gekennzeichnet, dass** zur vorzeitigen Auslösung einer Zug-Rückschaltung der Wert des aktuellen Fahrerwunsches durch den Volllastwert (100%) und der Wert des aktuellen Fahrwiderstands ($F_{FW}(0)$) durch den Wert des Fahrwiderstands an einem Wegpunkt vor dem Kraftfahrzeug oder durch den über einen Streckenbereich vor dem Kraftfahrzeug gemittelten Wert des Fahrwiderstands ersetzt wird, in dem der Grenzgang ($G_{Gr}$) des Grenzgangverlaufs $G_{Gr}(x_F)$ niedriger als der aktuell eingelegte Gang ($G_0$) ist ($G_{Gr} < G_0$).

19. Verfahren nach Anspruch 17 oder 18, **dadurch gekennzeichnet, dass** zur vorzeitigen Auslösung einer Zug-Rückschaltung die Zeitspanne ($\Delta t_{RS}$) oder die Wegstrecke ($\Delta x_{RS}$) bis zur Rückschaltung innerhalb des Grenzgangverlaufs $G_{Gr}(x_F)$ ermittelt wird, und dass die Zug-Rückschaltung nach Ablauf eines vorgegebenen Teils der Zeitspanne ($\Delta t_{RS}$) oder der Wegstrecke ($\Delta x_{RS}$) ausgelöst wird.

20. Verfahren nach einem der Ansprüche 17 bis 19, **dadurch gekennzeichnet, dass** eine Zug-Rückschaltung vor dem Ablauf des vorgesehenen Teils der Zeitspanne ($\Delta t_{RS}$) oder der Wegstrecke ($\Delta x_{RS}$) ausgelöst wird, wenn die Motordrehzahl ($n_{Mot}$) des Antriebsmotors bis dahin eine vorgegebene untere Grenzdrehzahl ($n_{Gr2}$) erreicht oder unterschreitet.

**Claims**

1. Method for controlling the shifting of an automatic step-by-step variable speed transmission which is arranged in a drive train of a motor vehicle between a drive engine which is embodied as an internal combustion engine and an axial drive, wherein during driving not only current vehicle-specific, carriageway-specific and driver-specific operating parameters are determined but also topographic data, in particular the altitude profile, relating to a section of route lying ahead of the motor vehicle, from which altitude profile the driving resistance profile ($F_{FW}(x_F)$) of the motor vehicle is determined for the section of route lying ahead, and in the automatic mode of the step-by-step variable speed transmission control commands for traction upshifts and/or traction downshifts are derived as a function of the driving resistance profile ($F_{FW}(x_F)$) during a traction mode and are implemented, **characterized in that** a limiting gearspeed profile ($G_{Gr}(x_F)$) is determined from the driving resistance profile ($F_{fw}(x_F)$) for the section of route lying ahead and from operating parameters of the drive engine and the step-by-step variable speed transmission, said limiting gearspeed profile ($G_{Gr}(x_F)$) being formed from the sequence of the respectively highest gearspeed in which the traction force of the drive engine which is effective at the driven wheels of the motor vehicle is respectively greater than the driving resistance ($F_{FW}(x_F)$), and **in that** the limiting gearspeed profile ($G_{Gr}(x_F)$) is evaluated in order to derive control commands for a traction upshift and/or traction downshift.

2. Method according to Claim 1, **characterized in that** the profile of a driving resistance transmission ratio $i_{FW}(x_F)$ is calculated from the driving resistance profile $F_{FW}(x_F)$ for the section of route lying ahead, according to the equation

$$i_{FW}(x_F) = F_{FW}(x_F) / (M_{Mot} * i_{TA} / r_{RA} * \eta_{TS})$$

with the section of route variable $x_F$, the engine torque $M_{MOt}$, the transmission ratio of the drive axle $i_{TA}$, the radius of the driven wheels $r_{FA}$ and the efficiency level of the drive train $\eta_{TS}$, at which driving resistance transmission ratio $i_{FW}(x_F)$ the traction force of the drive engine which is effective at the driven wheels of the motor vehicle corresponds respectively to the driving resistance $F_{FW}(x_F)$, and **in that** the gearspeeds of the limiting gearspeed profile $G_{Gr}(x_F)$ are determined therefrom as the highest gearspeeds, the transmission ratio $i_{G\_Gr}$ of which is respectively larger than the driving resistance transmission ratio $i_{G\_FW}(X_F)$ $(i_{G\_Gr} > i_{FW}(x_F)$ )·

3. Method according to Claim 1 or 2, **characterized in that** the control commands for a traction upshift and/or traction downshift are each transmitted to a shift controller of the step-by-step variable speed transmission by replacing at least one control-relevant value of a current operating parameter by a suitably determined or modified value.

4. Method according to Claim 3, **characterized in that** in order to influence the shift behaviour the value of the current driver's request (power request of the driver or of a cruise controller) and/or the value of the current driving resistance ($F_{FW}(0)$) are/is respectively replaced by a suitably determined or modified value.

5. Method according to at least one of Claims 1 to 4, **characterized in that** a traction upshift is basically enabled when the limiting gearspeed ($G_{Gr}$) of the limiting gearspeed profile $G_{Gr}(x_F)$ in the current vehicle position (t=0, $x_F$=0) is above the currently engaged gearspeed ($G_0$) ($G_{Gr}(0) > Go$), and this limiting gearspeed ($G_{Gr}$) is subsequently not undershot in the limiting gearspeed profile $G_{Gr}(x_F)$ within a predefined limiting driving time ($\Delta t_{H1}$) or limiting section of route ($\Delta x_{H1}$).

6. Method according to one of Claims 1 to 5, **characterized in that** a traction downshift is basically enabled when the limiting gearspeed ($G_{Gr}$) of the limiting gearspeed profile $G_{Gr}(x_F)$ in the current vehicle position (t =0, $x_F$=0) corresponds to the currently engaged gearspeed ($G_0$) ($G_{Gr}(0) = G_0$), the limiting gearspeed profile $G_{Gr}(x_F)$ subsequently provides a traction downshift into a relatively low limiting gearspeed within a predefined limiting driving time ($\Delta t_{R1}$) or limiting travel distance ($\Delta x_{R1}$) ($G_{Gr} < G_0$), and this limiting gearspeed ($G_{Gr}$) in the limiting gearspeed profile $G_{Gr}(x_F)$ is subsequently not exceeded within a predefined limiting driving time ($\Delta t_{H3}$) or limiting driving distance ($\Delta x_{H3}$).

7. Method according to Claim 5 or 6, **characterized in that** in order to enable a traction upshift and/or a traction downshift the control-relevant values of the current operating parameters are retained unchanged.

8. Method according to one of Claims 1 to 7, **characterized in that** a traction upshift is blocked or delayed if the limiting gearspeed ($G_{Gr}$) of the limiting gearspeed profile ($G_{Gr}(x_F)$ in the current vehicle position (t =0, $x_F$=0) is above the currently engaged gearspeed ($G_0$)($G_{Gr}(0)>G_0$), but this limiting gearspeed ($G_{Gr}$) is undershot again in the limiting gearspeed profile $G_{Gr}(x_F)$ within the predefined limiting driving time ($\Delta t_{H1}$) or limiting driving distance ($\Delta x_{H1}$).

9. Method according to Claim 8, **characterized in that** in order to block or delay a traction upshift the value of the current driver's request is replaced by the full-load value (100%) and the value of the current driving resistance ($F_{FW}(0)$) is replaced by the value of the driving resistance at a point on the route ahead of the motor vehicle or by the value of the driving resistance averaged over a part of the route ahead of the motor vehicle, at which value the limiting gearspeed ($G_{Gr}$) of the limiting gearspeed profile $G_{Gr}(x_F)$ corresponds to the currently engaged gearspeed ($G_0$) ($G_{Gr} = G_0$) .

10. Method according to one of Claims 1 to 9, **characterized in that** a traction upshift is triggered prematurely if the limiting gearspeed ($G_{Gr}$) of the limiting gearspeed profile $G_{Gr}(x_F)$ in the current vehicle position (t = 0, $x_F$ = 0) is at least two stages above the currently engaged gearspeed ($G_0$)($G_{Gr}(0)\geq G_0+2$), and this limiting gearspeed ($G_{Gr}$) is not undershot in the limiting gearspeed profile $G_{Gr}(x_F)$ over the entire route section ($\Delta x_{Ges}$) lying ahead.

11. Method according to one of Claims 1 to 9, **characterized in that** a traction upshift is triggered prematurely if the limiting gearspeed ($G_{Gr}$) of the limiting gearspeed profile $G_{Gr}(x_F)$ in the current vehicle position (t = 0, $x_F$ = 0) is at least one stage above the currently engaged gearspeed ($G_0$)($G_{Gr}(0)\geq G_0+1$), and this limiting gearspeed ($G_{Gr}$) is not undershot in the limiting gearspeed profile $G_{Gr}(x_F)$ within a predefined limiting driving time ($\Delta t_{H2}$) or limiting driving distance ($\Delta x_{H2}$).

12. Method according to Claim 10 or 11, **characterized in that** in order to prematurely trigger a traction upshift the value of the current driver's request is replaced by a partial-load value (for example 45%) and the value of the current driving resistance ($F_{FW}(0)$) is replaced by the value of the driving resistance at a point along the route ahead of the motor vehicle or by a value of the driving resistance which is averaged over part of the route ahead of the motor vehicle, **in that** the limiting gearspeed ($G_{Gr}$) of the limiting gearspeed profile $G_{Gr}(x_F)$ is raised by two stages or by one stage compared to the currently engaged gearspeed ($G_0$)($G_{Gr}=G_0+2$; $G_{Gr}=G_0+1$).

13. Method according to one of Claims 10 to 12, **characterized in that** premature triggering of a traction upshift is made possible only in the cruise controller mode and is enabled only when the respective setpoint speed ($v_{Setp}$) has previously already been reached and is currently being undershot ($v_F(0)<v_{Setp}$).

14. Method according to one of Claims 1 to 13, **characterized in that** for premature triggering and blocking or delaying of a traction upshift at least the profile of the engine rotational speed ($n_{Mot}*(x_F)$) of the drive engine is additionally predicted for the currently engaged gearspeed ($G_0$) on the basis of the current engine rotational speed ($n_{Mot}(0)$) on the basis of the driving resistance profile $F_{FW}(x_F)$ and evaluated.

15. Method according to one of Claims 1 to 14, **characterized in that** a traction downshift is blocked or delayed when the limiting gearspeed ($G_{Gr}$) of the limiting gearspeed profile $G_{Gr}(x_F)$ in the current vehicle position ($t = 0$, $x_F = 0$) corresponds to the currently engaged gearspeed ($G_0$)($G_{Gr}(0)=G_0$), the limiting gearspeed profile $G_{Gr}(x_F)$ subsequently provides a traction downshift into a relatively low limiting gearspeed within the predefined limiting driving time ($\Delta t_{R1}$) or limiting driving distance ($\Delta x_{R1}$)($G_{Gr}<G_0$), but this limiting gearspeed ($G_{Gr}$) in the limiting gearspeed profile $G_{Gr}(X_f)$ is exceeded again within the predefined limiting driving time ($\Delta t_{H3}$) or limiting driving distance ($\Delta x_{H3}$) and/or when the predicted profile of the engine rotational speed ($n_{Mot}*(x_F)$) does not undershoot a predefined lower limiting rotational speed ($n_{Gr1}$) within the predefined limiting driving time ($\Delta t_{H3}$) or limiting driving distance ($\Delta x_{H3}$).

16. Method according to Claim 15, **characterized in that** in order to block or delay a traction downshift the value of the current driver's request is replaced by a reduced value (for example 80%) and the value of the current driving resistance ($F_{FW}(0)$) is replaced by the value of the driving resistance at a point on the route ahead of the motor vehicle or by a value of the driving resistance which is averaged over a part of the route ahead of the motor vehicle, **in that** the limiting gearspeed ($G_{Gr}$) of the limiting gearspeed profile $G_{Gr}(x_F)$ corresponds to the currently engaged gearspeed ($G_0$) and/or a relatively high gearspeed ($G_{Gr}{\geq}G_0$).

17. Method according to one of Claims 1 to 16, **characterized in that** a traction downshift is triggered prematurely when the limiting gearspeed ($G_{Gr}$) of the limiting gearspeed profile $G_{Gr}(x_F)$ in the current vehicle position ($t = 0$, $x_F = 0$) corresponds to the currently engaged gearspeed ($G_0$)($G_{Gr}(0)=G_0$), the limiting gearspeed profile $G_{Gr}(x_F)$ subsequently provides a traction downshift into a relatively low limiting gearspeed within a predefined limiting driving time ($\Delta t_{R2}$) or limiting travel distance ($\Delta x_{R2}$)($G_{Gr}<G_0$), and this limiting gearspeed ($G_{Gr}$) is not exceeded in the limiting gearspeed profile $G_{Gr}(x_F)$ within a predefined limiting driving time ($\Delta t_{H4}$) or limiting driving distance ($\Delta x_{H4}$), and/or when the predicted profile of the engine rotational speed ($n_{Mot}*(x_F)$) undershoots the predefined lower limiting rotational speed ($n_{Gr1}$) within the predefined limiting driving time ($\Delta t_{H4}$) or limiting driving distance ($\Delta x_{H4}$).

18. Method according to Claim 17, **characterized in that** in order to prematurely trigger a traction downshift the value of the current driver's request is replaced by the full-load value (100%) and the value of the current driving resistance ($F_{FW}(0)$) is replaced by the value of the driving resistance at a point on the route ahead of the motor vehicle or by the value of the driving resistance averaged over a part of the route ahead of the motor vehicle, **in that** the limiting gearspeed ($G_{Gr}$) of the limiting gearspeed profile $G_{Gr}(x_F)$ is lower than the currently engaged gearspeed ($G_0$)($G_{Gr}<G_0$).

19. Method according to Claim 17 or 18, **characterized in that** in order to prematurely trigger a traction downshift the time period ($\Delta t_{RS}$) or the travel distance ($\Delta x_{RS}$) up to the shifting down within the limiting gearspeed profile $G_{Gr}(x_F)$ is determined, and **in that** the traction downshift is triggered after the expiry of a predefined part of the time period ($\Delta t_{RS}$) or of the travel distance ($\Delta x_{RS}$).

20. Method according to one of Claims 17 to 19, **characterized in that** a traction downshift is triggered before the expiry of the provided part of the time period ($\Delta t_{RS}$) or the travel distance ($\Delta x_{RS}$) if the engine rotational speed ($n_{Mot}$) of the drive engine reaches or undershoots a predefined lower limiting rotational speed ($n_{Gr2}$) by then.

**Revendications**

1. Procédé de commande de changement de vitesse d'une transmission à changement de vitesse étagée automatisée qui est disposée dans une chaîne cinématique d'un véhicule automobile entre un moteur d'entraînement réalisé sous forme de moteur à combustion interne et un entraînement d'essieu, dans lequel, pendant la conduite, outre des paramètres de fonctionnement actuels spécifiques au véhicule, à la chaussée et au conducteur, également des données topographiques se rapportant à une section de route située devant le véhicule automobile, en particulier le profil de hauteur, sont déterminées, on en déduit le profil de résistance à l'avancement ($F_{FW}(X_F)$) du véhicule automobile pour la section de route située devant, et, en mode automatique de la transmission à changement de vitesse étagée, en mode de fonctionnement de traction, des ordres de commande pour des passages à la vitesse supérieure en traction et/ou des rétrogradages en traction sont déduits et mis en oeuvre en fonction du profil de résistance à l'avancement ($F_{FW}(X_F)$), **caractérisé en ce que** l'on détermine, à partir du profil de résistance à l'avancement ($F_{FW}(X_F)$) pour la section de route située devant et pour des paramètres de fonctionnement du moteur d'entraînement et de la transmission à changement de vitesse étagée, une courbe de rapport limite ($G_{Gr}(X_F)$), qui est constituée de la succession du rapport à chaque fois le plus élevé, dans lequel la force de traction du moteur d'entraînement agissant au niveau des roues motrices du véhicule automobile est dans chaque cas supérieure à la résistance à l'avancement ($F_{FW}(X_F)$), et **en ce que** la courbe de rapport limite ($G_{Gr}(X_F)$) est analysée pour en déduire des ordres de commande pour un passage à la vitesse supérieure en traction et/ou un rétrogradage en traction.

**2.** Procédé selon la revendication 1, **caractérisé en ce qu'**à partir du profil de résistance à l'avancement ($F_{FW}(X_F)$) pour la section de route située devant, on calcule la courbe d'une variation de la résistance à l'avancement $i_{FW}(X_F)$ en fonction de l'équation $I_{FW}(X_F)=F_{FW}(X_F)/(M_{Mot}* i_{TA}/r_{RA}*\eta_{TS})$,

avec les variables de la chaussée $X_F$, le couple moteur $M_{Mot}$, le rapport de transmission de l'essieu moteur $i_{TA}$, le rayon des roues motrices $r_{RA}$ et le rendement de la chaîne cinématique $\eta_{TS}$, dans laquelle la force de traction du moteur d'entraînement agissant au niveau des roues motrices du véhicule automobile correspond à chaque fois à la résistance à l'avancement $F_{FW}(X_F)$, et **en ce que** l'on en déduit les rapports de la courbe de rapport limite ($G_{Gr}(X_F)$) comme étant les rapports les plus élevés dont la variation $i_{G\_Gr}$ est à chaque fois supérieure à la variation de la résistance à l'avancement $i_{G\_FW}(X_F)(i_{G\_Gr}>i_{FW}(X_F))$.

**3.** Procédé selon la revendication 1 ou 2, **caractérisé en ce que** les ordres de commande pour un passage à la vitesse supérieure en traction et/ou un rétrogradage en traction sont à chaque fois transmis à une commande de changement de vitesse de la transmission à changement de vitesse étagée en remplaçant au moins une valeur relative à la commande d'un paramètre de fonctionnement actuel par une valeur déterminée ou modifiée de manière appropriée.

**4.** Procédé selon la revendication 3, **caractérisé en ce que** pour influencer le comportement de changement de vitesse, la valeur du souhait actuel du conducteur (demande de puissance du conducteur ou d'un régulateur de vitesse) et/ou la valeur de la résistance à l'avancement actuelle ($F_{FW}(0)$) est à chaque fois remplacée par une valeur déterminée ou modifiée de manière appropriée.

**5.** Procédé selon au moins l'une quelconque des revendications 1 à 4, **caractérisé en ce qu'**un passage à la vitesse supérieure en traction est en principe déclenché lorsque le rapport limite ($G_{Gr}$) de la courbe de rapport limite ($G_{Gr}(X_F)$), dans la position actuelle du véhicule ($t =0$, $x_F=0$), se situe au-dessus du rapport actuellement enclenché ($G_0$)($G_{Gr}(0)>G_0$), et que ce rapport limite ($G_{Gr}$), dans la courbe de rapport limite ($G_{Gr}(X_F)$), n'est pas ensuite dépassé par le bas en l'espace d'un temps de conduite limite prédéterminé ($\Delta t_{H1}$) ou d'une distance de conduite limite prédéterminée ($\Delta x_{H1}$).

**6.** Procédé selon l'une quelconque des revendications 1 à 5, **caractérisé en ce qu'**un rétrogradage en traction est en principe déclenché lorsque le rapport limite ($G_{Gr}$) de la courbe de rapport limite ($G_{Gr}(X_F)$), dans la position actuelle du véhicule ($t = 0$, $x_F = 0$), correspond au rapport actuellement enclenché ($G_0$)($G_{Gr}(0)=G_0$), que la courbe de rapport limite ($G_{Gr}(X_F)$ prévoit ensuite, en l'espace d'un temps de conduite limite prédéterminé ($\Delta t_{R1}$) ou d'une distance de conduite limite prédéterminée ($\Delta x_{R1}$), un rétrogradage en traction à un rapport limite inférieur ($G_{Gr}(0)<G_0$) et que ce rapport limite ($G_{Gr}$) n'est ensuite pas dépassé dans la courbe de rapport limite ($G_{Gr}(X_F)$ en l'espace d'un temps de conduite limite prédéterminé ($\Delta t_{H3}$) ou d'une distance de conduite limite prédéterminée ($\Delta x_{H3}$).

**7.** Procédé selon la revendication 5 ou 6, **caractérisé en ce que** pour déclencher un passage à la vitesse supérieure en traction et/ou un rétrogradage en traction, les valeurs pertinentes pour la commande des paramètres de fonctionnement actuels sont conservées sans changement.

**8.** Procédé selon l'une quelconque des revendications 1 à 7, **caractérisé en ce qu'**un passage à la vitesse supérieure en traction est bloqué ou retardé lorsque le rapport limite ($G_{Gr}$) de la courbe de rapport limite $G_{Gr}(X_F)$, dans la position actuelle du véhicule ($t =0$, $x_F=0$), se situe au-dessus du rapport actuellement enclenché ($G_0$) ($G_{Gr}(0) > G_0$),

et que ce rapport limite ($G_{Gr}$) de la courbe de rapport limite $G_{Gr}(X_F)$ est toutefois à nouveau dépassé par le bas en l'espace du temps de conduite limite prédéterminé ($\Delta t_{H1}$) ou de la distance de conduite limite prédéterminée ($\Delta x_{H1}$).

9. Procédé selon la revendication 8, **caractérisé en ce que** pour le blocage ou le retardement d'un passage à la vitesse supérieure en traction, la valeur du souhait actuel du conducteur est remplacée par la valeur à pleine charge (100 %) et la valeur de la résistance à l'avancement actuelle ($F_{FW}(0)$) est remplacée par la valeur de la résistance à l'avancement en un point du trajet devant le véhicule automobile ou par la valeur de la résistance à l'avancement moyennée sur une région de la route devant le véhicule, **en ce que** le rapport limite ($G_{Gr}$) de la courbe de rapport limite $G_{Gr}(X_F)$ correspond au rapport actuellement enclenché ($G_0$)($G_{Gr}=G_0$).

10. Procédé selon l'une quelconque des revendications 1 à 9, **caractérisé en ce qu'**un passage à la vitesse supérieure en traction est déclenché préalablement lorsque le rapport limite ($G_{Gr}$) de la courbe de rapport limite $G_{Gr}(X_F)$, dans la position actuelle du véhicule (t=0, $x_F$=0), se situe à au moins deux étages au-dessus du rapport actuellement enclenché ($G_0$)($G_{Gr}(0) \geq G_0+2$), et que ce rapport limite ($G_{Gr}$) dans la courbe de rapport limite $G_{Gr}(X_F)$ n'est pas dépassé par le bas sur toute la section de route située devant ($\Delta x_{Ges}$).

11. Procédé selon l'une quelconque des revendications 1 à 9, **caractérisé en ce qu'**un passage à la vitesse supérieure en traction est déclenché préalablement lorsque le rapport limite ($G_{Gr}$) de la courbe de rapport limite $G_{Gr}(X_F)$, dans la position actuelle du véhicule (t=0, $x_F$=0), se situe à au moins un étage au-dessus du rapport actuellement enclenché ($G_0$)($G_{Gr}(0) \geq G_0+1$), et que ce rapport limite ($G_{Gr}$) dans la courbe de rapport limite $G_{Gr}(X_F)$ n'est pas dépassé par le bas en l'espace d'un temps de conduite limite prédéterminé ($\Delta t_{H2}$) ou d'une distance de conduite limite prédéterminée ($\Delta x_{H2}$).

12. Procédé selon la revendication 10 ou 11, **caractérisé en ce que** pour le déclenchement préalable d'un passage à la vitesse supérieure en traction, la valeur du souhait actuel du conducteur est remplacée par une valeur de charge partielle (par exemple 45 %) et la valeur de la résistance à l'avancement actuelle ($F_{FW}(0)$) est remplacée par la valeur de la résistance à l'avancement en un point du trajet devant le véhicule automobile ou par une valeur de la résistance à l'avancement moyennée sur une région de la route devant le véhicule, **en ce que** le rapport limite ($G_{Gr}$) de la courbe de rapport limite $G_{Gr}(X_F)$ est augmenté par rapport au rapport actuellement enclenché ($G_0$) de deux étages ou d'un étage ($G_{Gr}=G_0+2$ ; $G_{Gr}=G_0+1$).

13. Procédé selon l'une quelconque des revendications 10 à 12, **caractérisé en ce qu'**un déclenchement préalable d'un passage à la vitesse supérieure en traction n'est possible qu'en mode régulateur de vitesse et n'est déclenché que lorsque la vitesse de consigne concernée ($V_{Soll}$) a déjà été atteinte une fois et est actuellement dépassée par le bas ($V_F(0) < V_{Soll}$).

14. Procédé selon l'une quelconque des revendications 1 à 13, **caractérisé en ce que** pour un déclenchement préalable et un blocage ou un retardement d'un rétrogradage en traction, en outre au moins l'allure du régime du moteur ($n_{Mot}^*(X_F)$) du moteur d'entraînement pour le rapport actuellement enclenché ($G_0$) est prédite et analysée à partir du régime du moteur actuel ($n_{MOt}(0)$) à l'aide de la courbe de résistance à l'avancement $F_{FW}(X_F)$.

15. Procédé selon l'une quelconque des revendications 1 à 14, **caractérisé en ce qu'**un rétrogradage en traction est bloqué ou retardé lorsque le rapport limite ($G_{Gr}$) de la courbe de rapport limite $G_{Gr}(X_F)$, dans la position actuelle du véhicule (t = 0, $x_F$ = 0), correspond au rapport actuellement enclenché ($G_0$)($G_{sr}(0)=G_0$), que la courbe de rapport limite $G_{Gr}(X_F)$ prévoit ensuite, en l'espace du temps de conduite limite prédéterminé ($\Delta t_{R1}$) ou de la distance de conduite limite prédéterminée ($\Delta x_{R1}$), un rétrogradage en traction dans un rapport limite inférieur ($G_{Gr} < 0$), que ce rapport limite ($G_{Gr}$) dans la courbe de rapport limite $G_{Gr}(X_F)$ est toutefois à nouveau dépassé en l'espace du temps de conduite limite prédéterminé ($\Delta t_{H3}$) ou de la distance de conduite limite prédéterminée ($\Delta x_{H3}$), et/ou lorsque l'allure prédite du régime moteur ($n_{Mot}^*(X_F)$) ne passe pas en dessous d'un régime limite inférieur prédéfini ($n_{Gr1}$) en l'espace du temps de conduite limite prédéterminé ($\Delta t_{H3}$) ou de la distance de conduite limite prédéterminée ($\Delta x_{H3}$).

16. Procédé selon la revendication 15, **caractérisé en ce que** pour le blocage ou le retardement d'un rétrogradage en traction, la valeur du souhait actuel du conducteur est remplacée par une valeur réduite (par exemple 80 %) et la valeur de la résistance à l'avancement actuelle ($F_{FW}(0)$) est remplacée par la valeur de la résistance à l'avancement en un point du trajet devant le véhicule automobile ou par une valeur de la résistance à l'avancement moyennée sur une région de la route devant le véhicule, **en ce que** le rapport limite ($G_{Gr}$) de la courbe de rapport limite $G_{Gr}(X_F)$ correspond au rapport actuellement enclenché ($G_0$) et/ou un rapport supérieur ($G_{Gr} \geq G_0$).

**17.** Procédé selon l'une quelconque des revendications 1 à 16, **caractérisé en ce qu'**un rétrogradage en traction est déclenché préalablement lorsque le rapport limite ($G_{Gr}$) de la courbe de rapport limite $G_{Gr}(X_F)$, dans la position actuelle du véhicule (t = 0, $x_F$=0), correspond au rapport actuellement enclenché ($G_0$)($G_{Gr}(0)=G_0$), que la courbe de rapport limite ($G_{Gr}(_{XF})$ prévoit ensuite, en l'espace d'un temps de conduite limite prédéterminé ($\Delta t_{R2}$) ou d'une distance de conduite limite prédéterminée ($\Delta x_{R2}$), un rétrogradage en traction à un rapport limite inférieur ($G_{Gr}<G_0$) et que ce rapport limite ($G_{Gr}$) n'est pas dépassé dans la courbe de rapport limite ($G_{Gr}(X_F)$ en l'espace d'un temps de conduite limite prédéterminé ($\Delta t_{H4}$) ou d'une distance de conduite limite prédéterminée ($\Delta x_{H4}$), et/ou lorsque l'allure prédite du régime moteur ($n_{MOt}{}^*(X_F)$) ne passe pas en dessous du régime limite inférieur prédéfini ($n_{Gr1}$) en l'espace du temps de conduite limite prédéterminé ($\Delta t_{H4}$) ou de la distance de conduite limite prédéterminée ($\Delta x_{H4}$).

**18.** Procédé selon la revendication 17, **caractérisé en ce que** pour le déclenchement préalable d'un rétrogradage en traction, la valeur du souhait actuel du conducteur est remplacée par la valeur à pleine charge (100 %) et la valeur de la résistance à l'avancement actuelle ($F_{FW}(0)$) est remplacée par la valeur de la résistance à l'avancement en un point du trajet devant le véhicule automobile ou par la valeur de la résistance à l'avancement moyennée sur une région de la route devant le véhicule, **en ce que** le rapport limite ($G_{Gr}$) de la courbe de rapport limite $G_{Gr}(X_F)$ est inférieure au rapport actuellement enclenché ($G_0$)($G_{Gr}<G_0$).

**19.** Procédé selon la revendication 17 ou 18, **caractérisé en ce que** pour le déclenchement préalable d'un rétrogradage en traction, l'intervalle de temps ($\Delta t_{RS}$) ou la distance ($\Delta x_{RS}$) jusqu'au rétrogradage est déterminé(e) à l'intérieur de la courbe de rapport limite ($G_{Gr}(X_F)$) et **en ce que** le rétrogradage en traction est déclenché après l'écoulement d'une partie prédéfinie de l'intervalle de temps ($\Delta t_{RS}$) ou après le parcours d'une partie prédéfinie de la distance ($\Delta x_{RS}$).

**20.** Procédé selon l'une quelconque des revendications 17 à 19, **caractérisé en ce qu'**un rétrogradage en traction est déclenché avant l'écoulement de la partie prévue de l'intervalle de temps ($\Delta t_{RS}$) ou avant le parcours d'une partie prévue de la distance ($\Delta x_{RS}$) si le régime moteur ($n_{Mot}$) du moteur d'entraînement atteint ou passe alors en dessous d'un régime limite inférieur prédéfini ($n_{GP2}$).

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10129149 A1
- DE 102006001818 A1
- DE 102005050753 A1